# EUROPÄISCHE PATENTSCHRIFT

(11) **EP 4 547 445 B1**
(45) Veröffentlichungstag und Bekanntmachung des Hinweises auf die Patenterteilung: **06.05.2026**
(21) Anmeldenummer: 23715060.2
(22) Anmeldetag: 23.03.2023
(51) Int. Cl.: B23P 19/00, B25J 11/00, B25J 15/00, B25B 23/10, B23P 19/06, B25J 9/00

(54) **VORRICHTUNG UND VERFAHREN ZUR AUFNAHME UND ZUM SETZEN EINER SCHRAUBE**
DEVICE AND METHOD FOR RECEIVING AND SETTING A SCREW
DISPOSITIF ET PROCÉDÉ DE RÉCEPTION ET DE MISE EN PLACE D'UNE VIS

(30) Priorität: 28.06.2022 DE 102022206504
(43) Veröffentlichungstag der Anmeldung: 07.05.2025
(73) Patentinhaber: VOLKSWAGEN AKTIENGESELLSCHAFT, 38440 Wolfsburg (DE)
(72) Erfinder: SIKORA, Ralf, 14532 Stahnsdorf (DE); HAMMER, Thorge, 38479 Tappenbeck (DE); WERNICKE, David, 12621 Berlin (DE)
(86) Internationale Anmeldenummer: PCT/EP2023/057403
(87) Internationale Veröffentlichungsnummer: WO 2024/002536

(56) Entgegenhaltungen:
- DE-A1- 1 503 075
- DE-A1- 3 345 293
- US-A- 1 817 049

## Beschreibung

Die Erfindung betrifft eine Vorrichtung zur Aufnahme eines Schraubenschaftes einer Schraube und zum Setzen eines Schraubenkopfes der Schraube in eine Schraubnuss einer externen Schraubeinheit.

Bei der Montage, beispielsweise eines Fahrwerks an die Karosserie eines Fahrzeugs, werden sogenannte modulare Montagerahmen, hier als Fahrwerkträger bezeichnet, eingesetzt. Dabei handelt es sich um mechanische Tragstrukturen die in einer Anlagentechnik umlaufen und bis zur sogenannten "Hochzeit", in welcher das Fahrwerk samt Motor an die Karosserie geschraubt wird, alle notwendigen technischen Bestandteile, die unter dem Fahrzeug montiert werden müssen, aufnimmt und positioniert. Hierzu zählen ohne Anspruch auf Vollständigkeit beispielsweise besagter Motor, ein Abgassystem, eine Achse und eine Achsdämpfung. Der Sinn dieser modularen Montagerahmen beziehungsweise Fahrwerkträger ist es, die Montageprozesse so zu gestalten, dass sowohl die zu montierenden Bauteile als auch die entsprechenden Schrauben als Befestigungselemente einfach und kostengünstig von oben eingelegt werden können, bevor die Schraubenaufnahmen in Form von Schraubnüssen eventuell nicht mehr oder nur sehr schwer zugänglich sind. Die übliche Fahrzeugtrennung von Karosserie und Fahrwerk hilft also bei der effizienten Gestaltung der Montageprozesse. Von diesen modularen Montagerahmen beziehungsweise Fahrwerkträgern sind in einer üblichen Fahrzeug-Montagelinie mit ca. 1000 Fahrzeugen pro Tag etwa 50 Stück eingesetzt, die in einem Kreislauf rotieren und immer wieder neu bestückt werden

Wie bereits vorstehend angedeutet, ist einer der ersten Arbeitsgänge, die entsprechenden Schrauben, die dann zur Befestigung der einzelnen Module dienen sollen, in Schraubnüsse von Schraubeinheiten einzulegen. Dabei muss der Schraubenkopf einer jeden passenden Schraube mit dem Schraubenschaft nach oben in die betreffende, auf dem modularen Montagerahmen beziehungsweise Fahrwerkträger vorhandene Schraubnuss eingelegt werden. Damit die Schrauben, welche bis zu 120 cm lang sein können, beim Transport des Montagerahmens beziehungsweise Fahrwerkträgers nicht verloren geht, sind in den Schraubnüssen Magnete enthalten, die die Schrauben am Kopf mit dem Schraubenschaft nach oben festhalten. Somit können in nachfolgenden Stationen Bauteile, die festgeschraubt werden müssen, auf diese Schrauben aufgesetzt werden. Sind alle Bauteile positioniert, wird der Montagerahmen beziehungsweise Fahrwerkträger unter die passende Karosserie gefahren und automatische Schraubeinheiten ziehen dann nach und nach sowie nach einem festgelegten Ablaufplan alle Schrauben mit dem passenden Drehmoment an.

Die Anzahl der zu positionierenden Schrauben an einem Fahrwerk liegt je nach Fahrzeuggröße und je nach Zusatzmodulen (zum Beispiel Allrad-Antrieb) bei circa fünfzig Schrauben pro Fahrwerkträger. Der Schraubenaufsetzvorgang wird bei der Fahrwerkmontage vorzugsweise auf mehreren Stationen durchgeführt.

Es besteht der Bedarf, das Beladen der Schraubnüsse mit Schrauben respektive Setzen der Schrauben in besagte Schraubnüsse zu automatisieren.

Maßnahmen zur Automatisierung von Montageprozessen an sich sind in vielfältigen Ausführungen seit geraumer Zeit bekannt.

Aus den Druckschriften DE 10 2008 018 848 A1 DE und DE 10 2009 053 130 A1 sind gattungsgemäße Schraubvorrichtungen bekannt. Die Druckschrift EP 3 782 773 A1 beschreibt ein Werkzeug für einen kollaborierenden Roboter. Der Roboter weist einen beweglichen Roboterarm auf, an dessen freiem Ende das Werkzeug an einer Werkzeugaufnahme befestigt ist. Die Druckschrift DE 10 2018 117 238 A1 offenbart eine Zentriereinrichtung für einen Schrauber mit einer Schraubklinge zum Zentrieren der Schraubklinge des Schraubers auf eine zu verschraubende Schraube. Die Druckschrift DE 10 2012 108 476 A1 erläutert eine Schraubenbefestigungsvorrichtung. Die Druckschrift US 1 817 049 A beschreibt eine Vorrichtung zur Aufnahme eines Schraubenschaftes einer Schraube und zum Setzen eines Schraubenkopfes der Schraube in eine Schraubnuss einer externen Schraubeinheit.

Aus der Druckschrift DE 15 03 075 A1 ist eine Vorrichtung zum Einschrauben von Stiftschrauben oder Schraubbolzen bekannt.

Die Druckschrift DE 33 45 293 A1 beschreibt ein Stifteintreibwerkzeug in Kombination mit einer Drehmomentbegrenzungsvorrichtung.

Der Erfindung liegt die Aufgabe zugrunde, eine verbesserte Vorrichtung zur Aufnahme und zum sicheren Setzen einer Schraube mit Schraubenkopf und Schraubenschaft in eine Schraubnuss einer externen Schraubeinheit zu schaffen.

Die Aufgabe wird durch eine Vorrichtung gemäß den Merkmalen in den Ansprüchen 1 bis 9 gelöst.

Die Verfahrensweisen zur Aufnahme und zum sicheren Setzen einer Schraube in eine Schraubnuss mittels der Vorrichtung nach mindestens einem der Ansprüche 1 bis 9 sind in den Ansprüchen 10 und 11 niedergelegt.

Die Erfindung wird nachfolgend in Ausführungsbeispielen anhand der zugehörigen Zeichnungen erläutert. Es zeigen:
- Figur 1: eine perspektivische Einzeldarstellung eines in einer Montageanlage des Fahrzeugbaus umlaufenden Montagerahmens nach dem Stand der Technik, der mit auswechselbaren Rahmenmodulen bestückt ist;
- Figur 2: eine in ein Rahmenmodul des Montagerahmens nach Figur 1 integrierte Schraubeinheit mit einer Schraubnuss zur Aufnahme einer Schraube;
- Figur 3: eine schematische Darstellung einer ersten Ausführungsvariante einer Montageanlage,
- Figur 4: eine schematische Darstellung eines Ausschnittes einer zweiten Ausführungsvariante einer Montageanlage,
- Figur 5: eine perspektivische Einzeldarstellung eines Industrieroboters der Montageanlage mit mehreren erfindungsgemäßen Vorrichtungen zur Aufnahme und zum Setzen von Schrauben in je eine Schraubnuss einer Schraubeinheit eines Rahmenmoduls des Montagerahmens nach Figur 1;
- Figur 6: eine schematische Darstellung eines Industrieroboters mit der Vorrichtung nach Figur 5;
- Figur 7: eine perspektivische Darstellung einer Schraube und eine perspektivische Darstellung einer Schraubnuss mit Darstellung der zugehörigen Längsachse beziehungsweise der zugehörigen Rotationsachsen;
- Figur 8: eine perspektivische Darstellung einer Schraube in Greifelementen nach der Aufnahme der Schraube durch die Vorrichtung;
- Figur 9: eine perspektivische Darstellung eines Greifelementes;
- Figur 10: eine perspektivische Darstellung eines durch die Greifelemente gebildeten Einführtrichters zum Aufnehmen der Schraube gemäß Figur 8;
- Figur 11: eine perspektivische Darstellung der Vorrichtung mit der in den Greifelementen aufgenommen Schraube und eine Spiralinnenhülse, in der die Greifelemente angeordnet sind;
- Figuren 12A, 12B: Schnitte durch eine Schraube, eine Schraubnuss und eine Hülse (nur Figur 12A) zur Erläuterung des Prinzips zur Vermeidung der Rotation der Schraubnuss beim Setzen der Schraube in die Schraubnuss;
- Figur 13A: in einer ersten Ausgestaltungsvariante, eine Schraubnuss mit einem Klemmelement zur Vermeidung der Rotation der Schraubnuss beim Setzen der Schraube in die Schraubnuss;
- Figur 13B: in einer zweiten Ausgestaltungsvariante, eine Schraubnuss mit einer ersten Blockierhülse zur Vermeidung der Rotation der Schraubnuss beim Setzen der Schraube in die Schraubnuss;
- Figur 13C: in einer dritten Ausgestaltungsvariante, eine Schraubnuss mit einer zweiten Blockierhülse zur Vermeidung der Rotation der Schraubnuss beim Setzen der Schraube in die Schraubnuss;
- Figur 13D: eine perspektivische Darstellung einer Schraube kurz vor dem Setzen in die Schraubnuss und beispielhaft der zweiten Blockierhülse zur Vermeidung der Rotation der Schraubnuss beim Setzen der Schraube in die Schraubnuss;
- Figur 14: eine perspektivische Darstellung gemäß Figur 7, jedoch zusätzlich mit einer Spiralaußenhülse, die transparent dargestellt ist, sodass eine Spiralkontur auf der Innenfläche der Spiralaußenhülse verdeutlicht ist;
- Figur 15: eine perspektivische Außenansicht der Vorrichtung;
- Figur 16: ein Schnitt durch die in Längserstreckung der Vorrichtung verlaufenden Mittelachse der Vorrichtung gemäß Figur 15;
- Figur 17: ein oberer Teil der Vorrichtung mit transparent dargestellter Spiralaußenhülse und einem transparent dargestellten Einschraubflansch in den die Spiralaußenhülse eingeschraubt ist;
- Figur 18: die Vorrichtung in einer perspektivischen Darstellung mit der transparent dargestellten Spiralaußenhülse und einer transparent dargestellten Spiralinnenhülse sowie dem transparent dargestellten Einschraubflansch, und einem in der Spiralaußenhülse liegenden Schlitten in dem ein erster Sensor und an dem ein Stift angeordnet ist, der mit einem Schraubenschaft der eingesetzten Schraube gemäß Figur 22B kontaktiert, zur Verdeutlichung der Funktion des Sensors und des Stiftes;
- Figur 19: ein Schnitt durch die perspektivische Darstellung der Vorrichtung gemäß Figur 18 zur Verdeutlichung einer Funktion eines zweiten Sensors;
- Figur 20: ein Schnitt durch die perspektivische Darstellung der Vorrichtung gemäß Figur 18 zur Verdeutlichung einer Funktion eines dritten Sensors;
- Figuren 21A, 21B: perspektivische Darstellungen des Aufnehmens einer Schraube mit der Vorrichtung;
- Figur 22A: ein Schnitt durch die Vorrichtung zur Verdeutlichung eine Längendetektion der Schraube mittels des ersten Sensors, gemäß Figur 18 und einem zugehörigen ersten Detektorelement, wenn das Aufnehmen der Schraube fehl geschlagen ist oder eine zu kurze Schraube aufgenommen worden ist, und die vorgesehene Länge der Schrauben nicht detektiert wird;
- Figur 22B: ein Schnitt durch die Vorrichtung zur Verdeutlichung der Längendetektion der Schraube mittels des ersten Sensors, gemäß Figur 18 und dem zugehörigen ersten Detektorelement, wenn eine Schraube in der vorgesehenen richtigen Länge detektiert wird;
- Figur 22C: ein Schnitt durch die Vorrichtung zur Verdeutlichung der Längendetektion der Schraube mittels des ersten Sensors, gemäß Figur 18 und dem zugehörigen ersten Detektorelement, wenn eine zu lange Schraube nicht in der vorgesehenen richtigen Länge detektiert wird.

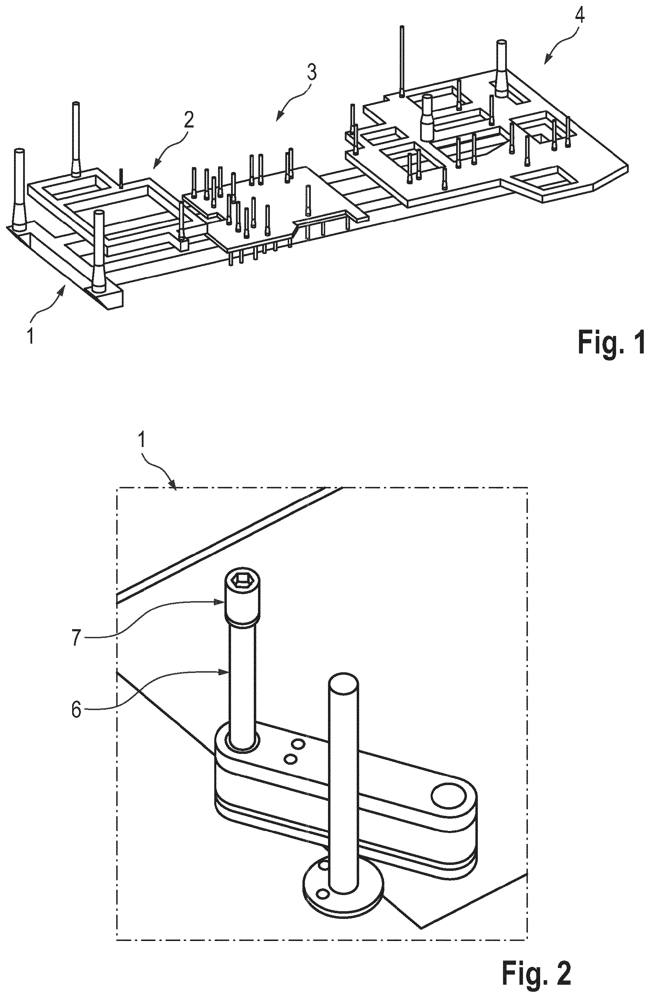

Figur 1 zeigt einen Montagerahmen 1 mit beispielgebend drei austauschbaren Rahmenmodulen 2, 3, 4 zur positionsgenauen Fixierung von weiter nicht dargestellten Bauteilen.

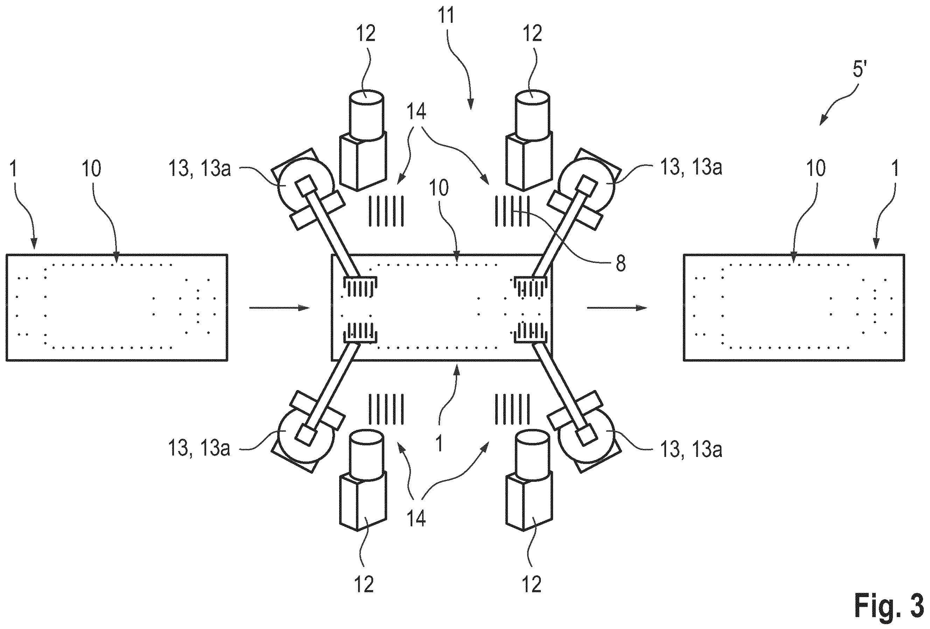

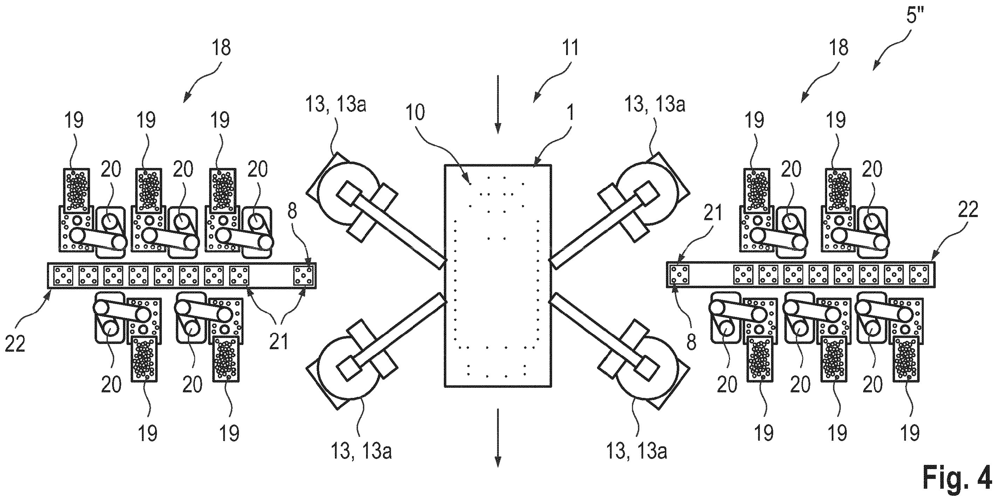

Der Montagerahmen 1 wird in einer Montageanlage 5 (vergleiche vorab Figuren 3 und 4) des Fahrzeugbaus umlaufend geführt und beispielsweise, wie bereits einleitend ausgeführt, bei der sogenannten "Hochzeit", in welcher das Fahrwerk samt Motor an die Karosserie eines nicht zeichnerisch dargestellten Fahrzeugs geschraubt wird, eingesetzt.

Der Montagerahmen 1 und/oder die Rahmenmodule 2, 3, 4 umfassen mehrere in dieselben integrierte Schraubeinheiten 6, welche an einem freien, oberen Ende jeweils eine an sich bekannte Schraubnuss 7 mit einem Innensechskant zur form- und kraftschlüssigen Aufnahme einer Schraube 8 respektive des Schraubenkopfes 8A derselben mit einem Außensechskant aufweist. Der Formschluss ergibt sich bekanntermaßen durch die korrespondieren Formschlusskonturen von Schraubnuss 7 und Schraubenkopf 8A, wogegen der Kraftschluss magnetisch bewirkt ist, indem der Schraubnuss 7 ein Permanent- oder Elektromagnet zugeordnet ist. Die Schraube 8 wird mit ihrem Schraubenschaft 8B nach oben in die betreffende Schraubnuss 7 gesetzt, bevor im Rahmen der besagten "Hochzeit" die zu verschraubenden Bauteile auf den Montagerahmen 1 und die Rahmenmodule 2, 3, 4 desselben aufgesetzt und diese mittels Schrauben 8 untereinander gefügt werden.

Figur 2 zeigt eine Schraubeinheit 6 mit einer Schraubnuss 7, wobei die Schraubnuss 7 sozusagen freistehend angeordnet, das heißt, sowohl voll umfänglich von der Seite als auch von oben zugänglich ist.

Figur 3 zeigt schematisch einen Ausschnitt einer ersten möglichen Ausführung einer einen umlaufenden Montagerahmen 1 aufweisenden Montageanlage 5, beispielsweise des Fahrzeugbaus. Die Montagerahmen 1 und/oder deren Rahmenmodule 2, 3, 4 weisen eine Vielzahl je eine Schraubnuss 7 aufweisende Schraubstellen 10 auf und werden nacheinander in einen Montagebereich 11 überführt, in welchem besagte Schraubnüsse 7 mit Schrauben 8 bestückt werden. Die Schrauben 8 werden mittels eines an sich bekannten und ebenfalls nicht dargestellten Schraubenförderers einem Schraubenreservoir 12 entnommen und in einen für eine Manipuliereinheit 13, vorliegend in Form eines Industrieroboters 13A (auch als Schraubensetzroboter bezeichnet), zugänglichen Vorhaltebereich 14 angeordnet und zwar aufrecht mit dem Schraubenschaft nach oben. Beispielgebend sind vorliegend vier Industrieroboter 13A gezeigt, denen jeweils ein Schraubenreservoir 12 und je ein Vorhaltebereich 14 zugeordnet sind.

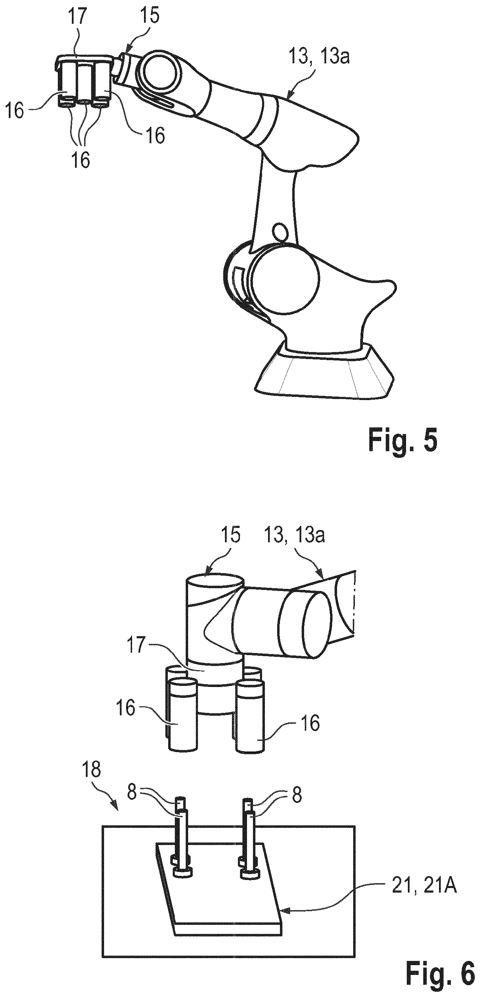

Bei den Industrierobotern 13A handelt es sich bevorzugt um Gelenkarmroboter (vergleiche Figur 5) mit weiter bevorzugt mehreren Bewegungsachsen. An einem Endglied 15 des Industrieroboters 13A ist eine Vorrichtung 16 zur Aufnahme und zum Setzen einer Schraube 8 angeordnet.

Beispielgebend weist gemäß den Figuren 3 und 5 ein jeder Industrieroboter 13A ein Endglied 15 auf, welches über eine Halterung 17 mit beispielsweise fünf derartigen Vorrichtungen 16 verfügt.

Hierdurch ist die Möglichkeit gegeben, gleichzeitig fünf Schrauben 8 aufzunehmen und diese bei Bedarf, beziehungsweise entsprechenden Voraussetzungen, gleichzeitig oder nacheinander in je eine Schraubnuss 7 zu setzen.

Die Montageanlage 5' nach Figur 3 unterscheidet sich zu der vorstehend beschriebenen Montageanlage 5" dadurch, dass je zwei Industrierobotern 13A, der vorstehend beschriebenen Art, eine Vorsortierstation 18 zugeordnet ist.

Eine jede Vorsortierstation 18 weist gemäß diesem Ausführungsbeispiel fünf Schraubenreservoire 19 auf. Eine solche Vorsortierstation 18 ist insbesondere dann vorgesehen, wenn in ihren Abmaßen unterschiedliche Schrauben 8 auf besagte Schraubnüsse 7 zu setzen sind.

Einem jeden Schraubenreservoir 19 ist ein an sich bekannter, vorzugsweise ebenfalls als Gelenkarmroboter ausgebildeter Vorsortierroboter 20 zugeordnet, welcher Schrauben 8 aufrecht mit dem Schraubenkopf 8A nach unten in definierten Positionen auf eine Palette 21 absetzt. Die Palette 21 ist vorliegend auf einem Fördermittel 22 angeordnet, wodurch diese die hintereinander und gegenüberliegend angeordneten Vorsortierroboter 20 sozusagen abfährt.

Um die Schrauben 8 so auf der Palette 21 zu lagern, dass diese während der Fortbewegung und der sich anschließenden Aufnahme durch einen Industrieroboter 13A (Schraubensetzroboter) nicht umfallen, sind diese auf der Magnetplatte 21, insbesondere einer Auflageplatte 21A magnetisch fixiert.

Bevorzugt wird besagte Magnetkraft mittels Permanent- oder Elektromagnet nur in besagten definierten Positionen erzeugt, wodurch vorteilhaft ein Ablösen der Schrauben 8 von der Platte 21A durch einen Industrieroboter 13A (Schraubensetzroboter) vereinfacht allein durch seitliches Verschieben der Schrauben 8 gegenüber der Platte 21A und anschließendes Abheben der Schrauben 8 nach Überwindung der Magnetkraft durch das seitliche Verschieben bewirkt werden kann.

Figur 6 ist eine Anordnung zu entnehmen, die das Endglied 15 eines Industrieroboters 13A samt einer Halterung 17 mit beispielgebend vier Vorrichtungen 16 zur Aufnahme und zum Setzen von vier Schrauben 8 zeigt, wobei die Vorrichtungen 16, zur Aufnahme der auf einer Palette 21 gehalterten Schrauben 8, oberhalb der Palette 21 angeordnet sind.

Gemäß der Aufgabe der Erfindung, soll die mit dem Bezugszeichen 16 vorgestellte Vorrichtung zur Aufnahme und zum sicheren Setzen einer Schraube 8 mit einem Schraubenkopf 8A und einem Schraubenschaft 8B in eine Schraubnuss 7 einer externen Schraubeinheit geschaffen und gegenüber den aus dem Stand der Technik bekannten Lösungen verbessert werden.

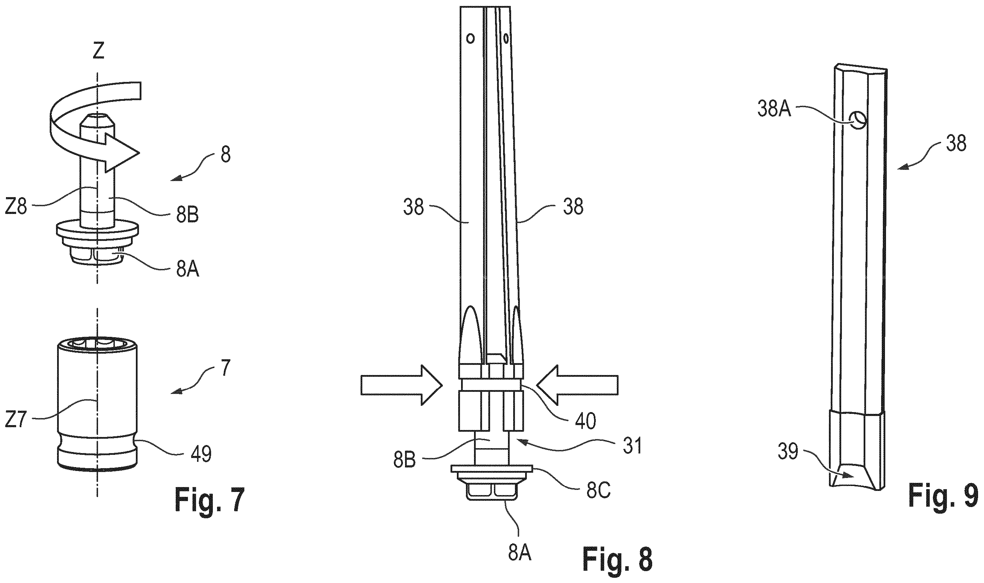

Die Vorrichtung 16 und ihre Funktionsweise wird nachfolgend anhand der Figuren 7 bis 22C detailliert erläutert:
Es besteht zunächst (vergleiche Figur 7) die Aufgabe, dass eine Rotationsachse Z8 der Schraube 8 zur Rotationsachse Z7 der Schraubnuss 7 zentriert werden muss.

Die Schraube 8 muss in Achsrichtung Z zur Schraubnuss 7 geführt werden. Während dieser Bewegung ist eine Rotation der Schraube 8 zur Schraubnuss 7 von mindestens 30 Grad erforderlich damit der Schraubenkopf 8A der Schraube 8 in der Schraubnuss 7 aufgenommen wird.

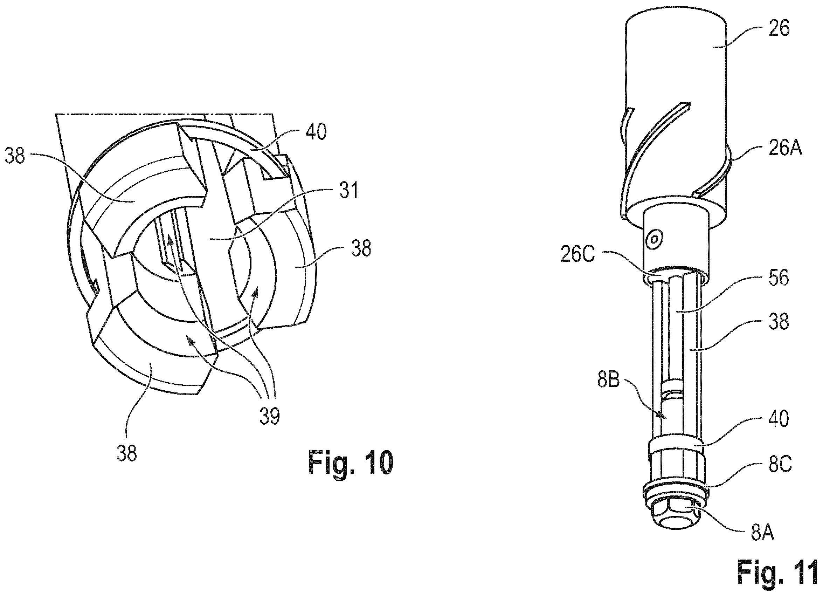

Gemäß Figur 8 ist vorgesehen, dass die Schraube 8 am Schraubenschaft 8B mit Greifelementen 38, sogenannten Klammern, reibschlüssig gegriffen wird. Die Greifelemente 38 weisen jeweils eine Befestigungsbohrung 38A auf. Die Klammern bilden gemeinsam einen Einführtrichter 39 (vergleiche Figuren 9 und 10) in der Art eines Zentrierkonus, wobei die Klammern an ihrem Einführende, das heißt, an der Aufnahmeöffnung 31 des Einführtrichters 39 angeschrägt sind und somit Einführschrägen aufweisen, wodurch ein leichteres Einführen des Schraubenschaftes 8B der Schraube 8 in den Einführtrichter 39 bewirkt wird.

Die Greifelemente 38 werden durch ein Spannelement 40 zusammengedrückt. Das Spannelement 40 übt in radialer Richtung zur zentralen in Längserstreckung des Einführtrichters 39 der Vorrichtung 16 verlaufenden Achse Z einen stetigen Druck aus. Im Ausführungsbeispiel ist das Spannelement 40 ein Gummiring (vergleiche Figuren 8 und 10), der die Klammern des Einführtrichters 39 stets in radialer Richtung, der in Längserstreckung des Einführtrichters 39 verlaufenden zentralen Achse Z - nachgiebig - zusammengedrückt.

Ein Außendurchmesser der Klammern wird etwas größer dimensioniert als der größte Außendurchmesser des Schraubenschaftes 8B der Schraube 8.

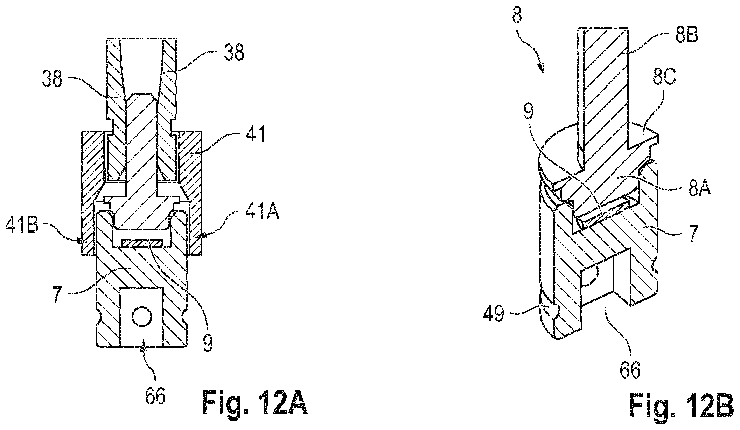

Es ist vorgesehen, dass der Außenmantel der Schraubnuss 7 in einer ersten Führung 41A und der Außendurchmesser der Klammern in einer zweite Führung 41B geführt werden, wie in Figur 12A verdeutlicht wird.

Die prinzipielle Idee einer Führungshülse 41 besteht darin, dass die Führungen 41A, 41B durch die Führungshülse 41 zueinander zentriert werden. Diese prinzipielle Idee führt in einer erfindungsgemäßen Weiterentwicklung zu einem sogenannter Niederhalter 44, der als Führungshülse 41 ausgebildet ist, wobei der Niederhalter 44 im Weiteren näher erläutert ist.

Die Figur 12B verdeutlicht, dass die Schraubnuss 7 gegen eine Rotation um die Rotationsachse Z7 blockiert werden muss, wenn der Schraubenkopf 8A der Schraube 8 in der überlagerten rotierenden und gleichzeitig entlang Achse 7 stattfindenden translatorischen Bewegung in Richtung Schraubnuss 7 in die Schraubnuss 7 eingesetzt wird.

Da gemäß Figur 12B Schrauben 8 eingesetzt werden, welche die Schraubnuss 7, insbesondere bei aufgesetzter Unterlegscheibe 8C vollständig von oben - vom Schraubenschaft 8B her - abdecken, kann beziehungsweise wird erfindungsgemäß der Außenmantel der Schraubnuss 7 für das Festhalten beziehungsweise das Sperren der Schraubnuss 7 genutzt, wie nachfolgend erläutert wird.

Das Festhalten der Schraubnuss 7 kann in drei grundsätzlichen Prinzipien, die in Kombination wirken können, bewirkt werden: Das Festhalten der Schraubnuss 7 wird entweder durch Reibung und/oder durch einen Formschluss und/oder durch einen Kraftschluss erfolgen, wodurch erfindungsgemäß mehrere Ausgestaltungsvarianten gebildet werden können, wobei nachfolgend bevorzugte Ausgestaltungsvarianten vorgeschlagen werden und erläutert sind.

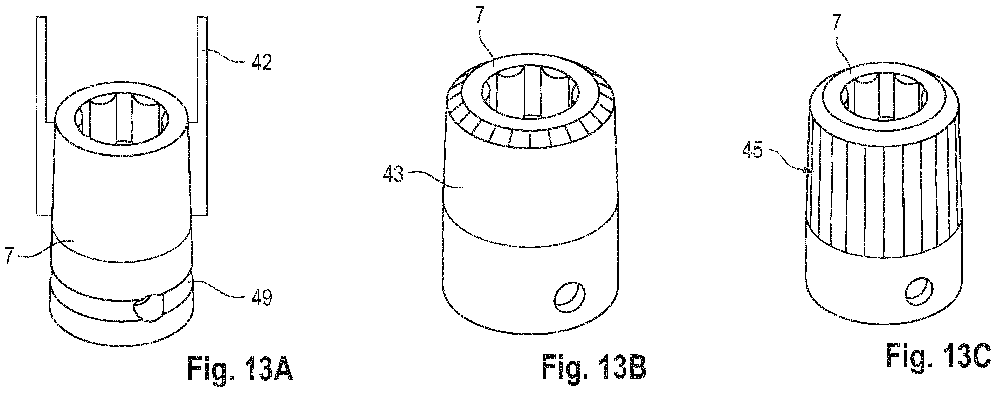

In einer bevorzugten Ausgestaltungsvariante wird gemäß Figur 13A ein Klemmelement 42 in die Vorrichtung 16 integriert, welche an der Außenmantelfläche der Schraubnuss 7 angreift und die Schraubnuss 7 festhält. Das Klemmelement 42 steht mit seinen in Figur 13A dargestellten losen Enden mit der Spiralinnenhülse 26 in Verbindung. Das Klemmelement 42 ist bevorzugt gemeinsam mit den Greiferelementen 38 in dem Aufnahmeelement 26C der Spiralinnenhülse 26 angebracht. Das Aufnahmeelement 26C ist in Figur 11 gezeigt.

Bei dieser Ausgestaltungsvariante bilden Reib- und Kraftschluss des Klemmelementes 42 die Festhaltekraft der Schraubnuss 7.

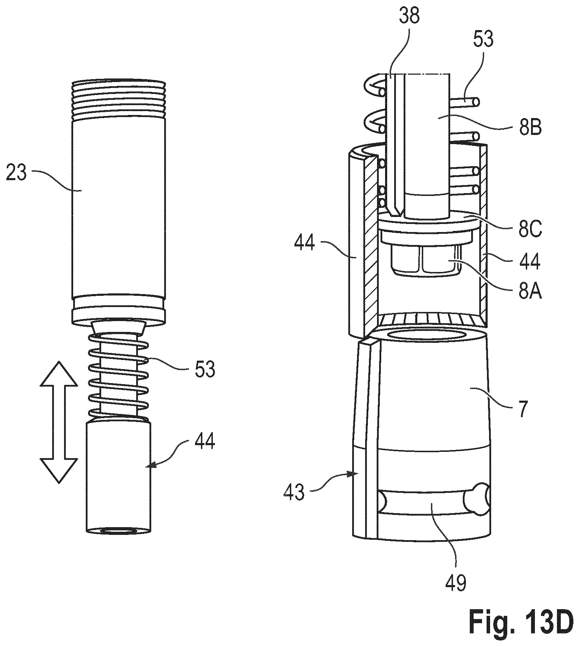

In einer weiteren bevorzugten Ausgestaltungsvariante ist gemäß Figur 13B eine erste Blockierhülse 43 vorgesehen, welche die Schraubnuss 7 mantelseitig zumindest teilweise oder gemäß der dargestellten Ausgestaltungsvariante vollständig umkleidet. Die Blockierhülse 43 weist eine stirnseitige Verzahnung auf, die mit einer ebenfalls stirnseitigen Verzahnung des Niederhalters 44 korrespondiert, wie in Figur 13 verdeutlicht ist. Bei dieser Ausgestaltungsvariante bildet der Formschluss der ineinandergreifenden Verzahnungen die Festhaltekraft der Schraubnuss 7.

In einer noch weiteren bevorzugten Ausgestaltungsvariante ist gemäß Figur 13C eine zweite Blockierhülse 45 vorgesehen, welche die Schraubnuss 7 ebenfalls mantelseitig vollständig umkleidet. Die Blockierhülse 45 weist eine außenmantelseitige Verzahnung auf, die mit einer innenmantelseitigen Verzahnung mit mindestens einem Zahn des Niederhalters 44 korrespondiert, wie in den Figuren nicht weiter verdeutlicht ist. Bei dieser Ausgestaltungsvariante bildet ebenfalls der Formschluss der ineinandergreifenden Verzahnungen die Festhaltekraft der Schraubnuss 7.

Zum Niederhalter 44 gemäß 13D, der in den zuvor bevorzugten Ausgestaltungen einsetzt wird, wird offenbart, dass er mittels eines Federelementes 53 federnd gelagert ist.

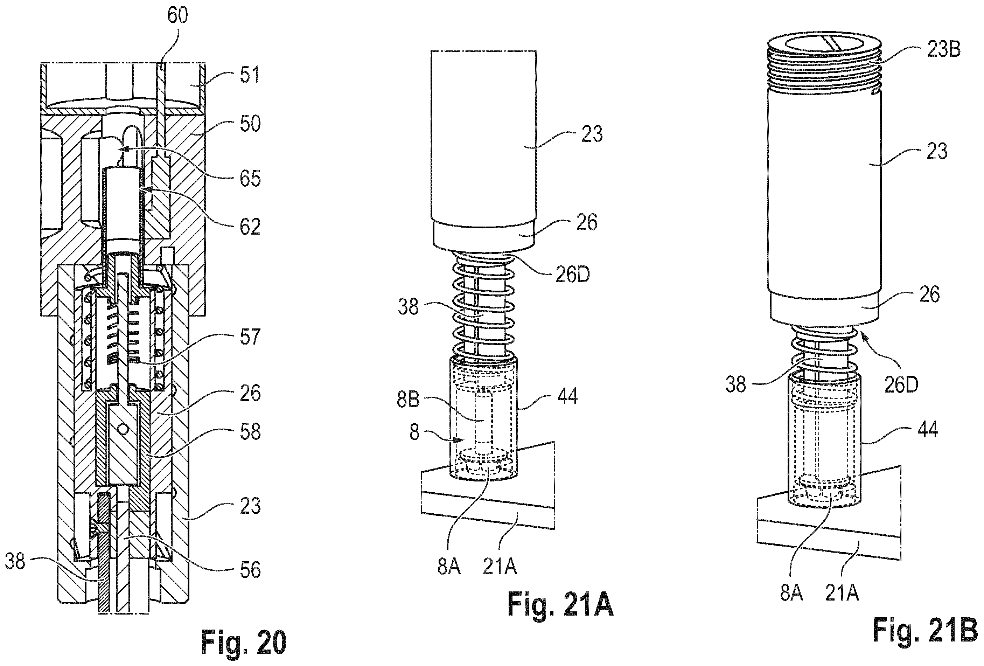

Das Federelement 53 stützt sich einends auf dem Niederhalter 44 und anderenends an einem Bund 26D (vergleiche vorab Figuren 21A und 21B) einer Spiralinnenhülse 26 ab, die in den Figuren 21A und 21B und 12D von einer Spiralaußenhülse 23 umgeben ist, wie noch näher erläutert wird.

Dabei wird eine Drehbewegung der Spiralinnenhülse 26 durch den Bund 26D nicht auf das Federelement 53 übertragen, jedoch stützt sich das Federelement 53 im Niederhalter 44 derart axial in Richtung Z-Achse ab.

Das heißt, es wird nur die axiale Bewegung der Spiralinnenhülse 26 auf das Federelement 53 und somit auf den Niederhalter 44 übertragen.

Der Niederhalter 44 erfüllt unabhängig von den Ausgestaltungsvarianten zwei Funktionen.

Eine erste Funktion besteht darin, dass eine Zentrierung der Schraubnuss 7 erfolgt. Es ist, wie in den Figuren 13B und 13C gezeigt ist, eine Zentrierschräge an der Schraubnuss 7 ausgeführt, die gegenüberliegend mit einer Zentrierschräge des Niederhalters 44 korrespondiert.

Durch den Niederhalter 44 wird die Vorrichtung 16 und damit die Schraube 8 (in der Achse Z, vergleiche Figur 7) relativ zur Schraubnuss 7 zentriert, das heißt Z7 und Z8 werden in Längserstreckung der Vorrichtung 16 in Z zentriert.

Durch das Klemmelement (Figur 13A) oder die Verzahnungen (Figuren 13B und 13C) der Blockierhülsen 43, 45 gemäß den bevorzugten Ausgestaltungsvarianten und die angeordneten Zentrierschrägen wird in der zweiten Funktion des Niederhalters 44 die Rotation der Schraubnuss 7 blockiert, sobald der Niederhalter 44 auf die Verzahnungen der ersten oder zweiten Blockierhülse 43, 45 der Schraubnuss 7 aufsetzt (bei Blockierhülse 43) oder eingreift (bei Blockierhülse 45) oder das Klemmelement 42 die Schraubnuss 7 umgreift.

Der Außendurchmesser des Niederhalters 44 kann auf die Umgebung angepasst werden, um Kollisionen zu angrenzenden Bauteilen zu vermeiden.

Ferner wird offenbart, dass die erste oder zweite Blockierhülse 43, 45, die auch als Nussmantel bezeichnet wird, nach entsprechender passender Vorfertigung auf jede Schraubnuss 7 aufgesteckt und verrastet werden kann. Wie insbesondere in Figur 7 gezeigt ist, weist die Schraubnuss 7 auf ihrer Mantelfläche eine Kerbe 49 auf, die mit einer hinsichtlich der Form korrespondierten Wulst übereinstimmt, die auf den Innenseiten (nicht dargestellt) der Blockierhülse 43, 45 angeordnet ist.

Mit anderen Worten, die Blockierhülsen 43, 45 sitzen formschlüssig verrastet und reibschlüssig auf der Schraubnuss 7. Zudem ist eine Öffnung in der Schraubnuss 7 und eine Öffnung in der jeweiligen Blockierhülse 43, 45 angeordnet, durch die bei entsprechender Lage der Blockierhülse 43, 45 gegenüber der Schraubnuss 7 ein Lagesicherungselement in der Art eines Splintes oder dergleichen eingeführt wird, um die positionsgetreue Anordnung der Schraubnuss 7 gegenüber der Schraubnuss 7 zu gewährleisten.

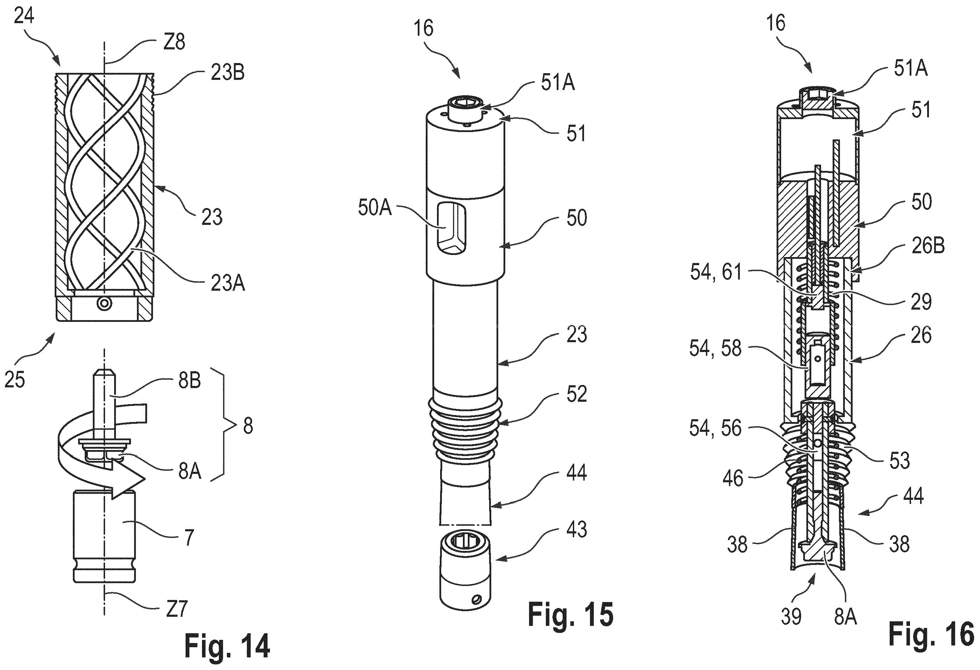

Die Figur 14 verdeutlicht, dass die Schraube 8 zum Einsetzen der Schraube 8 respektive des Schraubenkopfes 8A in die Schraubnuss 7 um die Längsachse um circa 30° gedreht werden muss.

Beim Einsetzen der Schraube 8 in die Schraubnuss 7 erfolgt eine Rotationsbewegung bei gleichzeitiger abwärts gerichteter translatorischer Bewegung der Vorrichtung 16.

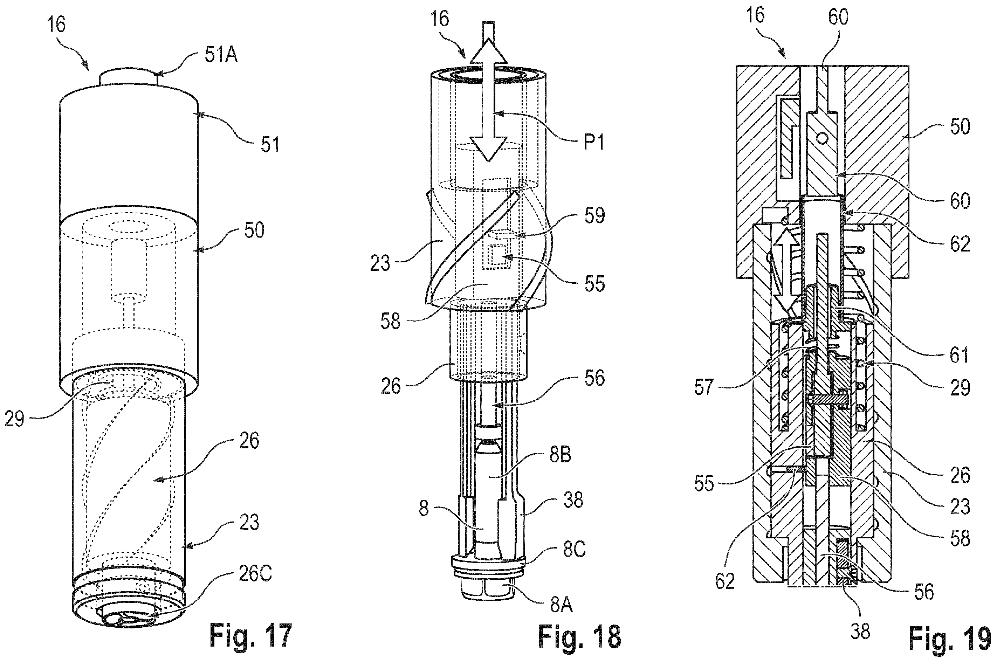

Die Rotationsbewegung wird durch die in Figur 14 gezeigte Spiralaußenhülse 23 hervorgerufen, die auf ihrer Innenfläche eine Spiralkontur 23A aufweist, die auf eine Spiralkontur 26A der Spiralinnenhülse 26 (vergleiche Figur 11 und vorab Figur 17) an der Außenfläche einwirkt.

In der erfindungsgemäßen spezifischen Ausgestaltung, sind die Spiralkonturen 26A, 23A als Innengewinde = entspricht der Spiralkontur 23A und Außengewinde = entspricht der Spiralkontur 26A als Helixgewinde ausgeführt.

Figur 14 zeigt am oberen Ende der Spiralaußenhülse 23 ein Außengewinde 23B, welches dazu dient, die Spiralaußenhülse 23 der Vorrichtung 16 in ein Innengewinde eines Einschraubflansches 50 (vergleiche vorab Figur 15) einzuschrauben, wobei auf dem Einschraubflansch 50 ein Montageflansch 51 ausgebildet ist, der mit dem Endglied 15 der Aufnahmevorrichtung eines Roboterarms des Industrieroboters 13A in Verbindung steht.

Die Vorrichtung 16 umfasst somit die Spiralaußenhülse 23, welche ein erstes Hülsenende 24 und ein zweites Hülsenende 25 aufweist, sowie eine in derselben gelagerte Spiralinnenhülse 26.

Die Spiralinnenhülse 26 ist über die bevorzugt als Helixgewinde ausgebildete Gewindepaarung derart verstellbar in der Spiralaußenhülse 23 gelagert, dass die Spiralinnenhülse 26 und damit die Schraube 8 eine überlagerte Bewegung aus einer axialen und einer Rotationsbewegung ausführt, wodurch sich die in der Vorrichtung 16 aufgenommenen Schrauben 8 um die Rotationsachse Z8 drehen, wie durch den Pfeil in Figur 14 verdeutlicht ist.

Die Spiralinnenhülse 26 ist einends mittels zumindest eines Federelements 29, bevorzugt in Form einer Schraubenfeder, im Bereich des oberen Endes 24 der Spiralaußenhülse 23 an einem Einschraubflansch 50 abstützt, wobei sich das Federelement 29 anderenends in der Spiralinnenhülse 26 abstützt, wie Figur 19 am besten verdeutlicht.

Die Gewindepaarung weist dabei bevorzugt eine derartige Gewindesteigung auf, dass die Spiralinnenhülse 26 gegenüber Spiralaußenhülse 23 entgegen der Federkraft des vorgespannten Federelements 29 leichtgängig axial gegen die Federkraft einfedert, wobei sich die Spiralinnenhülse 26 und damit die Schraube 8 gleichzeitig um die Rotationsachse Z dreht, während die Spiralaußenhülse 23 lediglich eine translatorische Bewegung in Z ausführt.

In Figur 15 ist die Vorrichtung 16 in einer perspektivischen Darstellung von außen gezeigt.

Gezeigt ist der Einschraubflansch 50 und der Montageflansch 51, wobei der Einschraubflansch 50 ein Sichtfenster 50A aufweist, worauf noch eingegangen wird. Der Montageflansch 51 umfasst einen Stecker 51A.

Gezeigt ist zudem die Spiralaußenhülse 23 von außen. Unterhalb der Spiralaußenhülse 23 ist ein flexibles Verbindungselement 52, bevorzugt in der Art eines Faltenbalges angeordnet, der mit dem zweiten Hülsenende 25 der Spiralaußenhülse 23 einerseits und mit dem Niederhalter 44 andererseits in Verbindung steht.

Der mit dem elastischen Faltenbalg verbundene Niederhalter 44 hält über die Verzahnung die Schraubnuss 7 fest, sobald der Niederhalter 44 aufsetzt und überträgt so das Drehmoment zum Hineindrehen der Schraube 8 nur auf die Schraube 8, wobei die Schraubnuss 7 gleichzeitig durch den Niederhalter 44 gegen Verdrehen gesichert wird. Das Drehmoment wird durch das Helixgewinde zwischen der Spiralaußenhülse 23 und der Spiralinnenhülse 26 erzeugt.

Beispielhaft ist in Figur 15 die erste Blockierhülse 43 gemäß Figurenfassung 13B dargestellt.

Die in Figur 15 gezeigten Komponenten der Vorrichtung 16 sind ebenfalls in Figur 16 gekennzeichnet, wobei Figur 16 eine Innenansicht in die Vorrichtung 16 erlaubt. Dabei wird das schon erläuterte Federelement 29 sichtbar und es wird ein weiteres Federelement 53 gezeigt, das zwischen Spiralinnenhülse 26 und Niederhalter 44 angeordnet ist und sich jeweils an diesen beiden Komponenten abstützt. Durch dieses ebenfalls vorgespannte Federelement 53 ist eine überlagerte axiale und rotierende Relativbewegung der Spiralinnenhülse 26 gegenüber dem Niederhalter 44 möglich, wenn sich die Spiralinnenhülse 26 wie oben erläutert, beim Einsetzen der Schraube 8 um die Rotationsachse Z8 dreht, wobei der Niederhalter 44 nur axiale Bewegungen entlang der Z-Achse ausführt, wenn die Vorrichtung mit der Schraube 5 auf die Schraubnuss 7 aufgesetzt wird, die in Figur 16 nicht gezeigt ist.

Figur 16 zeigt noch Komponenten einer Längenermittlungsbaugruppe 54 auf deren Einzelkomponenten noch eingegangen wird.

Die weitere Figur 17 zeigt weitere Merkmale der Vorrichtung 16.

Über die Komponenten der Figuren 15 und 16 hinaus, zeigt Figur 17 einen Sensor 55 der Längenermittlungsbaugruppe 54. Die Sensorik der Längenermittlungsbaugruppe 54 wird noch näher erläutert.

Ferner wird verdeutlicht, dass in der Spiralinnenhülse 26 ein Aufnahmeelement 26C angeordnet ist, das unterschiedliche und/oder unterschiedlich positionierte Aufnahmeöffnungen aufweist. In den Aufnahmeöffnungen können sich hinsichtlich des Innendurchmessers voneinander unterscheidende Greifelemente 38 angeordnet werden, sodass mittels der Vorrichtung 16, respektive der Greifelemente 38, verschiedene Schraubendurchmesser für M8, M10, M12 und M14 erfasst werden können, sodass verschiedenen Schraubendurchmessern für M8, M10, M12 und M14 unterschiedliche Greifelemente 38 zugeordnet sind, die sich hinsichtlich des Innendurchmessers voneinander unterscheiden.

Dabei ist vorgesehen, dass die Greifelemente 38, die in der Art von länglichen Klammern ausgebildet sind, beweglich angeordnet sind, wodurch ein Positionsversatz in Bezug auf die vorgesehene Position der Schrauben - beziehungsweise Rotationsachse Z8 der Schraube 8 - gegenüber der Rotationsachse Z7 der Schraubnuss 7 beim Aufnehmen der Schraube 8 und beim Setzen der Schraube 8 ausgeglichen werden kann. In vorteilhafter Weise kann ein Positionsversatz von bis zu 7 mm ausgeglichen werden.

In Bezug die bewegliche Anordnung der Greifelemente 38 ist im Detail vorgesehen, dass die Bauteile 52, 44, 43, wobei die Greifelemente 38 im Niederhalter 44 (vergleiche Figur 16) angeordnet sind und gegenüber den in Figur 15 darüber liegenden Bauteilen über den beweglich angeordneten Faltenbalg 52 einen beweglichen Teilbereich der Vorrichtung 16 bilden.

Mit anderen Worten, die in Gebrauchsposition unteren Bauteile 52, 44, 43 mit dem Einführtrichter 39 können in vorteilhafter Weise gegenüber der Längsachse Z seitlich ausschwenken. Das heißt, es kann eine in gewissem Maß ungenau positionierte Schraube 8 in verbesserter Weise aufgenommen werden. Analog dazu, kann die Schraube 8 ebenfalls in vorteilhafter Weise auch in eine um den Positionsversatz, das heißt, in einem gewissen Maß ungenau positionierte Schraubnuss 7 in verbesserter Weise eingesetzt werden. Die dabei eingesetzten Bauteile, insbesondere die Greifelemente 38 im Niederhalter 44, sind dadurch in vorteilhafter Weise auch von einer Beschädigung besser geschützt.

Figur 18 zeigt Details der Längenermittlungsbaugruppe 54. Der Sensor 55 ist als induktiver Sensor ausgebildet.

Wie weiter in den Figuren 19, 20, 21 und 22A bis 22C in einer Zusammenschau gezeigt ist, wird innerhalb der Spiralaußenhülse 23 und der Spiralinnenhülse 26 ein Stift 56 angeordnet, der in einem in Pfeilrichtung gemäß dem Pfeil P1 in Figur 18 in einem Schlitten 58 gehalten ist, wobei der Schlitten 58 gemäß der Pfeilrichtung des Pfeils P1 in Figur 18 axial entlang der Längserstreckung Z der Vorrichtung 16 federnd angeordnet und beweglich in der Spiralinnenhülse 26 geführt ist.

Die Länge des Stiftes 56 ist einer bestimmten Länge einer der Schrauben 8 mit den verschiedenen Maßen M8, M10, M12, M14 zugeordnet.

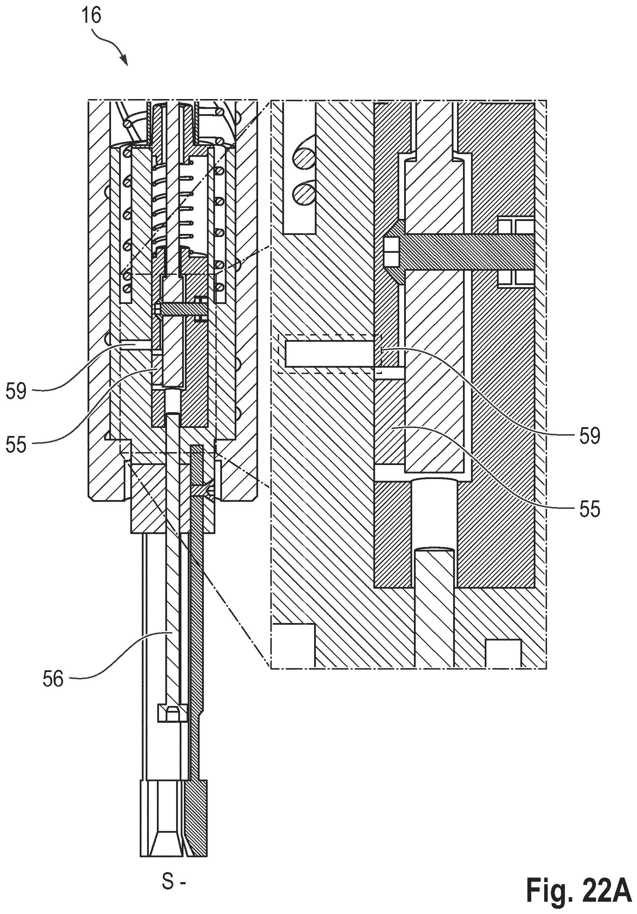

Mit anderen Worten, jeder Schraube 8 ist ein Satz von Greifelementen 38 und ein Stift 56 zugeordnet, wobei der jeweilige Stift 56 eine bestimmte Länge aufweist, anhand derer die vorgesehene Länge der jeweiligen Schraube 8 detektiert werden kann, wie noch anhand der Figur 22A bis 22C erläutert wirds.

Das heißt, bei einer Bewegung des Schlittens 58 in axialer Richtung innerhalb der Spiralinnenhülse 26 bewegt sich der Stift 56 mit. Dabei ist von Bedeutung, dass dann, wenn der Stift 56 bewegt wird, der Schlitten 58 innerhalb der Spiralinnenhülse 26 axial verlagert wird.

Der Schlitten 58 sitzt in einer Ausgangsposition mit seiner Unterseite auf einem Kragen der Spiralinnenhülse 26 auf, wie insbesondere in Figur 22A gezeigt ist.

Der Schlitten 58 ist, wie am besten in Figur 20 sichtbar ist, federnd mittels eines weiteren Federelementes 57 angeordnet. Das Federelement 57 stützt sich einerseits auf der Oberseite des Schlittens 58 und andererseits an einem Lagerelement 61 ab, welches ein zweites Detektorelement 62 trägt, das in der Art einer metallischen Hülse ausgebildet ist, die in den Einschraubflansch 50 hineinragt. Auf das zweite Detektorelement 62 wird noch eingegangen.

Innerhalb der Spiralinnenhülse 26 ist ein ortsfestes erstes Detektorelement 59 angeordnet, welches seine Lage nur gemeinsam mit der Spiralinnenhülse 26 ändert.

Im Schlitten 58 sitzt der erste induktive Sensor 55, der seine Lage, wie beschrieben, innerhalb der Spiralinnenhülse 26 ändert.

### Längendetektion:

Ausgehend von Figur 18 und zugehöriger Beschreibung und den Figuren 22A bis 22C umfasst die Längenermittlungsbaugruppe 54 somit im Wesentlichen den Schlitten 58, den Stift 56, den induktiven Sensor 55 und das erste Detektorelement 59, wobei die Funktion nachfolgend detailliert erläutert wird. Vorab zusammengefasst: Mit einem federnd gelagerten Stift 56 in der Mitte der Spiralinnenhülse 26 wird die Schraubenlänge, im Sinne von "richtige Länge", zu "kurze Länge" oder zu "große Länge", der Schrauben 8 indirekt gemessen. Der Stift 56 führt den Sensor 55 an dem bevorzugt als Metallplättchen ausgebildeten ortsfestes erstes Detektorelement 59 vorbei.

Ist die vorgesehene Länge der Schraube 8 richtig, liegt der Sensor 55 im Bereich des Metallplättchens und das erste Detektorelement 59 liefert ein Signalbild S+.

Liegt die vorgesehene Länge der Schraube 8 nicht vor, das heißt, liefert das erste Detektorelement 59 kein aktives Signalbild S+, sondern es liegt kein aktives Signalbild S- vor, ist die Schraube 8 zu kurz oder es ist keine Schraube 8 aufgenommen worden. In vorteilhafter Weise wird die Längendetektion darüber hinaus genutzt, um festzustellen, ob die Schraube/n 8 gegebenenfalls beim Transport verloren gegangen ist/sind oder gegebenenfalls so weit herausgerutscht ist/sind, dass sie beim Setzen mit Anlagenbestandteilen kollidiert/kollidieren.

Liegt die Länge der Schraube 8 über der vorgesehenen Länge, liefert das erste Detektorelement 59 zunächst kurz ein aktives Signalbild S+, welches in nicht aktives Signalbild S- übergeht. Dann ist die Schraube 8 zu lang.

Nur dann, wenn ein aktives Signalbild S+ beim Einsetzen der Schraube 8 in die Schraubnuss 7 zu einem vorprogrammierbaren Zeitpunkt vom Sensor 55 erfasst wird, weist die durch die Längenermittlungsbaugruppe 54 indirekt gemessene Schraube 8 die richtige Länge auf. Es kann somit geprüft werden, ob eine Schraube 8 aufgenommen wurde, ob die gewünschte/vorgesehene Schraubenlänge richtig ist oder ob eine zu kurze oder zu lange Schraube 8 von der Vorrichtung 16 aufgenommen wurde.

Zur Verdeutlichung ist in den Figuren 22A bis 22B eine gestrichelte Signalebene auf der Höhe des ortsfesten ersten Detektorelementes 59 eingetragen, an der die erläuterten Signalbilder gebildet werden.

Figur 22A zeigt beispielhaft das erste Detektorelement 59, den Sensor 55 und den Stift 56 in der Vorrichtung 16, jedoch ohne Schraube 8. Der Sensor 55 erreicht das erste Detektorelement 59 nicht; es wird somit das Signalbild S- erfasst.

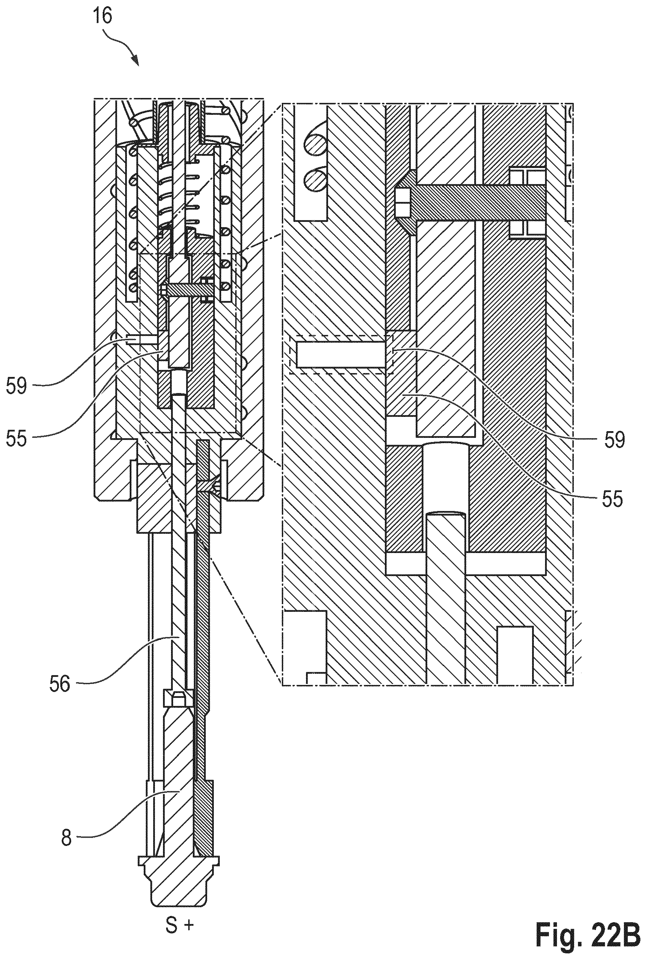

Figur 22B zeigt beispielhaft das erste Detektorelement 59, den Sensor 55 und den Stift 56 in der Vorrichtung 16, mit der vorgesehenen Schraube 8. Der Sensor 55 erreicht das erste Detektorelement 59; es wird somit das Signalbild S+ erfasst.

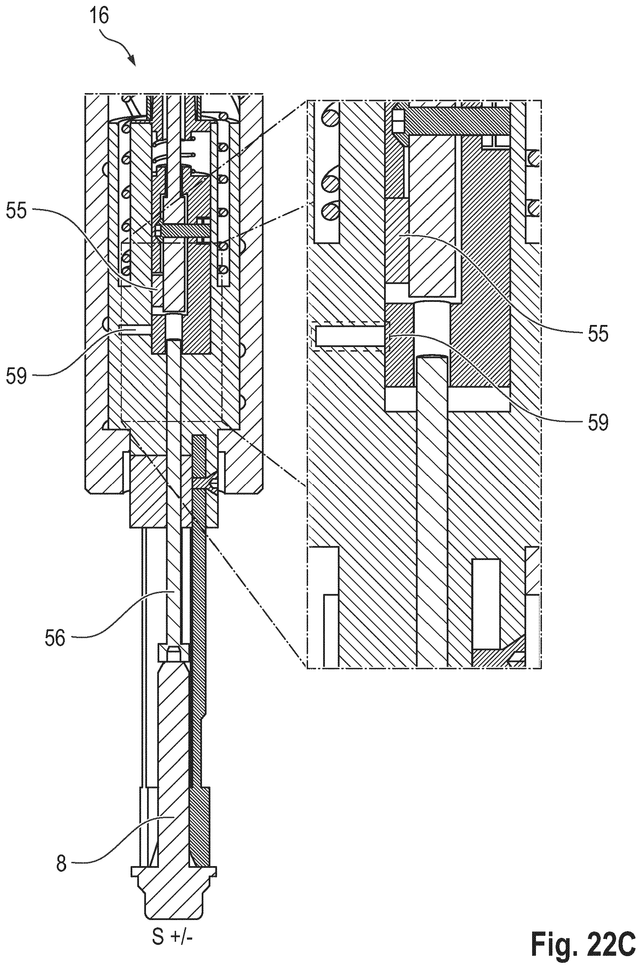

Figur 22C zeigt beispielhaft das erste Detektorelement 59, den Sensor 55 und den Stift 56 in der Vorrichtung 16, mit ein zu langen Schraube 8. Der Sensor 55 erreicht zunächst das erste Detektorelement 59, welches anschließend inaktiv wird, da der Sensor 55 - durch die zu lange Schraube 8 an dem ersten Detektorelement 59 vorbeifährt; es wird somit das Signalbild S+/erfasst.

### Überwachungsdetektion:

Unter Bezugnahme auf Figur 19 umfasst die Vorrichtung zudem den zweiten, einen ortsfesten Sensor 60, der bevorzugt im Einschraubflansch 50 angeordnet ist.

Wenn die Spiralinnenhülse 26 gegenüber der Spiralaußenfeder 26, beim Aufnehmen der Schraube 8 und beim direkten Setzen der Schraube 8 einfedert, bewegt sich das zweite Detektorelement 62, das in der Art einer metallischen Hülse ausgebildet ist, mit nach oben. Sobald die Spiralinnenhülse 26 einfedert, wird das zweite Detektorelement 62 vor den zweiten induktiven Sensor 60 geführt. Dadurch wird erkannt, ob die Spiralinnenhülse 26 einfedert. Liefert der Sensor 60 ein aktives Signal, ist die Spiralinnenhülse 26 im vorgegebenen Rahmen, das heißt, in einem vorgegebenen Weg eingefedert.

### Beschädigungsdetektion:

Unter Bezugnahme auf Figur 22 umfasst die Vorrichtung zudem den dritten, wiederum einen ortsfesten Sensor 65, der ebenfalls bevorzugt im Einschraubflansch 50 angeordnet ist.

Wenn die Spiralinnenhülse 26 gegenüber der Spiralaußenfeder 26, beim Aufnehmen der Schraube 8 und beim direkten Setzen der Schraube 8, einfedert, bewegt sich das zweite Detektorelement 62, das in der Art einer metallischen Hülse ausgebildet ist, mit nach oben. Sobald die Spiralinnenhülse 26 einfedert, wird das zweite Detektorelement 62 gegebenenfalls vor dem dritten induktiven Sensor 65 geführt. Dadurch wird erkannt, ob die Spiralinnenhülse 26 zu tief, das heißt, weiter als in einem vorgegebenen Weg einfedert. Liefert der dritte Sensor 65 ein aktives Signal, ist die Spiralinnenhülse 26 zu weit eingefedert und es kann gegebenenfalls zu Beschädigungen der Vorrichtung 16 beziehungsweise des mit ihr verbundenen Industrieroboters 13A kommen. Liegt ein aktives Signal am Sensor 65 an, ist als Fahrbedingung im Roboterprogramm ein Nothalt des Industrieroboters 13A vorgesehen.

Unter Bezugnahme auf Figur 15 ist in vorteilhafter Weise im Einschraubflansch 50 das Sichtfenster 50A angeordnet. Durch dieses Sichtfenster 50A kann der Programmierer und der Werker den Weg der Einfederung der Spiralinnenhülse 26 erkennen. So kann, insbesondere bei der Programmierung der Vorrichtung 16 die optimale Einfederung der Spiralinnenhülse 26 leicht programmiert werden. Die Optimierung des Weges der Einfederung der Spiralinnenhülse 26 dient zur genauen Aufnahme der Schraube 8 und zur Taktzeitreduzierung; und auch um kritische Positionen während des Betriebs der Vorrichtung zu erkennen.

Bevor abschließend, der Ablauf nochmals zusammengefasst wird, einige wesentliche, nicht abschließende Vorteile der Vorrichtung 16. Es handelt sich, mit Hinweis auf das Aufnahmeelement 26C der Spiralinnenhülse 26 um eine modulare Vorrichtung 16 beziehungsweise um ein modulares Werkzeug für alle Schraubendurchmesser. Es ist automatisiert ein sehr schnelles Setzen der Schrauben möglich. Die Vorrichtung 16 umfasst keine aktiv angetriebenen Komponenten. Die Sensoren 55, 60, 65 erlauben eine sensorische Überwachung, der erläuterten Parameter. Der veränderbare Niederhalter 44 erlaubt eine Anpassung der Zugänglichkeit der Vorrichtung 16 zu den Schrauben 8. Beim Setzen der Schrauben 8 in die Schraubnuss 7 werden größere Toleranzen zwischen Schraube 8 und Schraubnuss 7 ausgeglichen. Mit anderen Worten, große Positionstoleranzen zwischen 7 und 8 sind möglich beziehungsweise werden toleriert.

Verschleißteile, wie zum Beispiel die Greifelemente 38 sind zudem in vorteilhafter Weise leicht auswechselbar.

### Aufnahme der Schraube 8 durch die Vorrichtung 16:

Mit Bezugnahme auf die Figuren 21A, 21B wird der zusammengefasste prinzipielle Verfahrensvorgang der Aufnahme der Schraube 8 nochmals erläutert:
In einer ersten Aufnahme-Phase (Figur 21A) schieben sich die im Ausführungsbeispiel drei Greifelemente 38 über den Schraubenschaft 8B der Schraube 8, wobei die Schraube 8 im Einführtrichter 39 axial zentriert wird. Der Niederhalter 44 federt zunächst noch nicht ein.

Anschließend in einer zweiten Aufnahme-Phase (Figur 21B) wird der Schraubenschaft 8B der Schraube 8 in den Einführtrichter 39 eingeschoben, wobei der Niederhalter 44 gegenüber der Spiralinnenhülse 26 und der Spiralaußenhülse 23 axial in z-Richtung entlang der z-Achse einfedert, wobei die Spiralinnenhülse 26 keine überlagerte Bewegung aus einer axialen Bewegung in Z und einer Drehbewegung um Z ausführt.

Der Niederhalter 44 federt somit ausschließlich axial in Richtung der Längsachse Z der Vorrichtung 16 ein. Die Greifelemente 38 der Vorrichtung 16 werden in einer dritten Aufnahme-Phase auf die Unterseite des Schraubenkopfes "auf Block" gefahren, wobei die Greifelemente 38 zu dem Schraubenschaft 8B der Schraube 8 eine Reibkraft mit einem Reibkoeffizienten erzeugen, die von dem Spannelement 40 hervorgerufen wird, das in radialer Richtung zur Z-Achse wirkt.

Die Reibung steht im Gleichgewicht mit derjenigen Kraft, welche die Spiralaußenhülse 23 gegenüber der Spiralinnenhülse 26 verlagert. Rutscht somit der Schraubenschaft 8B leicht in den durch die Greifelemente 38 ausgebildeten Einführtrichter 39 und ist der Block erreicht, wird beim Aufnehmen - Spiralaußenhülse 23 und der Spiralinnenhülse 26 - keine überlagerte Bewegung aus einer axialen Bewegung in Z und einer Drehbewegung um Z ausführt.

Wie erläutert, drückt das Spannelement 40 in der dritten Aufnahme-Phase (Figur 8) die eingeführten drei Greifelemente 38, die auch als Klammerbacken bezeichnet werden, mantelseitig in radialer Richtung zur Z-Achse auf die Schraubengewindespitze des Schraubenschaftes 8B.

In einer vierten Aufnahme-Phase wird die vollständig aufgenommene Schraube 8 zum Lösen der Schraube 8 von der "magnetischen" Auflageplatte 21A mittels des programmierten Industrieroboters 13A seitlich von der Auflageplatte 21A weggeführt, bis die durch einen unterhalb der Auflageplatte 21A angeordneten Einzelmagneten erzeugte Anziehungskraft der "Magnetplatte" so gering ist, dass die Schraube 8 wegbefördert und anschließend an einem anderen durch den Industrieroboter 13A angesteuerten anderen Ort in die Schraubnuss 7 eingesetzt werden kann.

### Setzen der Schraube 8 durch die Vorrichtung 16:

Die derart aufgenommene Schraube 8 wird in einer ersten Setz-Phase des Setzens der Schraube 8, wie am besten in Figur 13D gezeigt ist, während der Schraubenschaft 8B in der Aufnahmeöffnung 31 des durch die drei Greifelemente 38 gebildeten Einführtrichters 39 sitzt, über der Schraubnuss 7 positioniert und in die Schraubnuss 7 gesetzt.

Die Schraubnuss 7 ist dabei in vorteilhafter Weise rotatorisch frei gelagert, wobei vorgesehen ist, dass die Schraubnuss 7 schwimmend, quer zur Z-Achse Z beziehungsweise der Rotationsachse Z7 sowohl in X- und Y-Richtung um +/-3 mm gelagert ist, wodurch sich zwar Toleranzen in der Position der Schraubnuss 7 ergeben, die in vorteilhafter Weise dazu führen, dass das Setzen der Schraube 8 in die Schraubnuss 7 erleichtert wird. Diese schwimmende Lagerung der Schraubnuss 7 wird dadurch erreicht, dass eine Spindel (nicht dargestellt) der vorne genannten Schraubeinheit 6, auf der die Schraubnuss 7 aufsitzt, sodass die Aufnahmeöffnung 31 der Spindel axial gegenüberliegt, leicht in den genannten Toleranzen gelagert ist. Die Spindel sorgt im Verlauf der weiteren Montage dafür, dass die in die Schraubnuss 7 eingesetzte Schraube 8 über die durch die Spindel angetriebene Schraubnuss 7 später am Fahrwerk montiert, das heißt, eingeschraubt werden kann. Bei dieser Vorgehensweise hat sich erwiesen, dass die durch die schwimmend gelagerte Spindel erzeugten Toleranzen bei der Montage, insbesondere bei der Einführung der Schrauben 8 in die vergebenen Öffnungen im Fahrwerk vorteilhaft sind.

Wie erläutert, wird die Schraube 8 in der ersten Setz-Phase (vergleiche Figuren 7 und 8), während der Schraubenschaft 8B in der Aufnahmeöffnung 31 des durch die drei Greifelemente 38 gebildeten Einführtrichters 39 sitzt, über der Schraubnuss 7 positioniert und anschließend durch weiteres Herunterdrücken der Vorrichtung 16 in Richtung Schraubnuss 7 in einer nachfolgenden Setz-Phase zentriert.

Das Zentrieren durch den Niederhalter 44 und das Klemmelement 42 oder einer der Blockierhülsen 43, 45 wurde bereits detailliert erläutert. Die Schraube 8 wird (in der Achse Z, vergleiche Figur 7) relativ zur Schraubnuss 7 zentriert, das heißt, Z7 und Z8 werden in Längserstreckung der Vorrichtung 16 in Z zentriert.

Anschließend erfolgt in der nächsten Setz-Phase, durch weiteres Herunterdrücken der Vorrichtung 16 in Richtung Schraubnuss 7, das Blockieren der Schraubnuss 7, wenn der Niederhalter 44 über das Klemmelement 42 oder einer der Blockierhülsen 43, 45 die Schraubnuss 7 kontaktiert und rotationsseitig blockiert.

Durch das weitere Herunterdrücken der Vorrichtung 16 in Richtung Schraubnuss 7 gegen die Federkraft des Federelements 29 und die Federkraft des Federelementes 49 dringt der Schraubenkopf 8A der Schraube 8 in einer weiteren Setz-Phase idealerweise unmittelbar in die Schraubnuss 7 ein und wird in derselben in einer abschließenden Setz-Phase mittels Magnetkraft des Permanentmagneten 9 (vergleiche Figuren 12A und 12B) in der Schraubnuss 7 gehalten.

Ist eine derartige ideale Situation nicht zu verzeichnen, dass der Schraubenkopf 8A der Schraube 8 unmittelbar in der weiteren Setz-Phase in die Schraubnuss 7 eindringt, da der Außensechskant des Schraubenkopfes 8A steht nicht ideal zum Innensechskant der Schraubnuss 7 steht, und sich der Schraubenkopf 8A mit seiner Stirnfläche auf der Stirnfläche oder den Aufnahmeerhebungen (vergleiche Figuren 13A, 13B) in der Innenfläche der Schraubnuss 7 abstützt, kommt die Gewindepaarung zwischen Spiralaußenhülse 23 und Spiralinnenhülse 26 zur Wirkung, indem beim Herunterdrücken der Vorrichtung 16 in einer weiteren Setz-Phase die Spiralinnenhülse 26 eine Drehbewegung erfährt, bis der Schraubenkopf 8A ideal zur Schraubnuss 7 steht und in deren Innensechskant eindringt (vgl. Fig. 14). Dabei wird der Faltenbalg als flexibles Verbindungselement 52 in Längserstreckung Z der Vorrichtung 16 gestaucht.

Diese Vorgehensweise, die bei dem axialen Herunterdrücken der Vorrichtung 16 in Längserstreckung in der weiteren Setz-Phase die Spiralinnenhülse 26 eine Drehbewegung erfährt, ist der Regelfall, da zumeist der Schraubenkopf 8A der Schraube 8 nicht idealerweise unmittelbar in die Schraubnuss 7 eindringt.

Nachdem erfolgreichen Setzen der Schraube 8 wird die Vorrichtung 16 von der Schraube 8 und der Schraubnuss 7 abgehoben. Die Vorrichtung 16 nimmt dabei wieder ihre Ausgangsposition ein, da die auf Vorspannung angeordneten Federelemente 29, 49 entlastet werden. Die Magnetkraft des Permanentmagneten 9 zum Halten der Schraube 8 in der Schraubnuss 7 ist derart groß eingestellt, dass beim Abheben der Vorrichtung 16 die Haltekraft des Klemmmittels 32 der Vorrichtung 16 überwunden wird.

Während des Setzens der Schraube 8 erfolgt, die bereits erläuterte Längendetektion der Schraube 16 in der Vorrichtung 16, die Überwachungsdetektion der Vorrichtung 16 und die Beschädigungsdetektion der Vorrichtung 16.

### Bezugszeichenliste

- 1: Montagerahmen
- 2: Rahmenmodul
- 3: Rahmenmodul
- 4: Rahmenmodul
- 5': Montageanlage
- 5": Montageanlage
- 6: Schraubeinheit
- 7: Schraubnuss
- 8: Schraube
- 8A: Schraubenkopf
- 8B: Schraubenschaft
- 8C: Unterlegscheibe
- 9: Permanentmagnet
- 10: Schraubstelle
- 11: Montagebereich
- 12: Schraubenreservoir
- 13: Manipuliereinheit
- 13A: Industrieroboter
- 14: Vorhaltebereich
- 15: Endglied
- 16: Vorrichtung
- 17: Halterung
- 18: Vorsortierstation
- 19: Schraubenreservoir
- 20: Vorsortierroboter
- 21: Palette
- 21A: Auflageplatte
- 22: Fördermittel
- 23: Spiralaußenhülse
- 23A: Spiralkontur
- 23B: Außengewinde
- 24: erstes Hülsenende von 23
- 25: zweites Hülsenende von 23
- 26: Spiralinnenhülse
- 26A: Spiralkontur
- 26B: Außengewinde
- 26C: Aufnahmeelement
- 26D: Bund
- 29: Federelement
- 38: Greifelemente
- 38A: Befestigungsbohrung
- 39: Einführtrichter
- 40: Spannelement
- 41: Führungshülse
- 41A: erste Führung
- 41B: zweite Führung
- 42: Klemmelement
- 43: erste Blockierhülse
- 44: Niederhalter
- 45: zweite Blockierhülse
- 49: Kerbe
- 50: Einschraubflansch
- 50A: Sichtfenster
- 51: Montageflansch
- 51A: Stecker
- 52: flexibles Element
- 53: Federelement
- 54: Längenermittlungsbaugruppe
- 55: erster Sensor
- 56: Stift
- 57: Federelement
- 58: Schlitten
- 59: erstes Detektorelement
- 60: zweiter Sensor
- 61: Lagerelement
- 62: zweites Detektorelement
- 65: dritter Sensor
- 66: Spindelaufnahme
- Z: Achse in Längserstreckung der Vorrichtung 16
- Z7: Rotationsachse von 7
- Z8: Rotationsachse von 8
- P1: Pfeil

## Patentansprüche

1. Vorrichtung (16) zur Aufnahme eines Schraubenschaftes (8B) einer Schraube (8) und zum Setzen eines Schraubenkopfes (8A) der Schraube (8) in eine Schraubnuss (7) einer externen Schraubeinheit (6), wobei eine Spiralaußenhülse (23) der Vorrichtung sowie eine in der Spiralaußenhülse (23) gelagerten Spiralinnenhülse (26) über eine korrespondierende ineinandergreifende Gewindepaarung in der Spiralaußenhülse (23) verstellbar gelagert ist, wobei die Vorrichtung (16) insgesamt eine axiale Bewegung in Längserstreckung (Z) und die Spiralinnenhülse (26) eine überlagerte Bewegung aus einer axialen und einer Drehbewegung um eine Achse (Z) in Längserstreckung der Vorrichtung (18) ausführt, sobald in Längserstreckung der Vorrichtung (16) eine axiale Kraft auf die Spiralaußenhülse (23) ausgeübt wird und sich die Spiralinnenhülse (26) indirekt gegen die axiale Kraft abstützt, wobei ein Federelement (29) angeordnet ist, welches die Spiralinnenhülse (26) gegenüber der Spiralaußenhülse (23) axialbeweglich abstützt, wobei die Spiralinnenhülse (26) an ihrem zu der Schraube (8) weisenden Ende ein Aufnahmeelement (26C) aufweist, von dem Greifelemente (38) abstehen, die sich im Gebrauch der Vorrichtung (16) gegen die axiale Kraft auf einer Auflageplatte (21A) abstützen, wobei die Greifelemente (38) einen Einführtrichter (39) mit einer Aufnahmeöffnung (31) für den Schraubenschaft (8B) bilden, wobei der Schraubenschaft (8B) bei der Aufnahme der Schraube (8) mittels der sich ausschließlich in axialer Richtung in Längserstreckung bewegenden Vorrichtung (16) von den Greifelementen (38) unter Freilassung des Schraubenkopfes (8A) aufgenommen wird, wobei der freigelassene Schraubenkopf (8A) der aufgenommenen Schraube (8) beim Setzen der Schraube (8) in die Schraubnuss (7) gesetzt wird, während die Spiralinnenhülse (26) gegenüber der Spiralaußenhülse (23) die überlagerte axiale Drehbewegung ausführt, wenn sich die Greifelemente (38) gegen die axiale Kraft auf der Schraubnuss (7) abstützen, wobei an der Spiralaußenhülse (23) ein in Längserstreckung der Vorrichtung (16) axial beweglicher Niederhalter (44) angeordnet ist, der die Schraubnuss (7) beim Setzen des Schraubenkopfes (8A) in die Schraubnuss (7) gegen die über den Schraubenschaft (8B) von der Spiralinnenhülse (26) auf die Schraube (8) und beim Setzkontakt auf die Schraubnuss (7) wirkende Drehbewegung blockiert.

2. Vorrichtung (16) nach Anspruch 1, **dadurch gekennzeichnet, dass** die Vorrichtung (16) eine Längenermittlungsbaugruppe (54) aufweist, die beim Setzen der Schraube (8) eine Längendetektion der Schraube (8) erlaubt, wobei die Längenermittlungsbaugruppe (54) die Komponenten (55, 56, 57, 58, 59, 61) umfasst

3. Vorrichtung (16) nach Anspruch 1, **dadurch gekennzeichnet, dass** die Vorrichtung (16) eine Einheit (57, 58, 60, 62) aufweist, die beim Setzen der Schraube (8) eine Überwachungsdetektion erlaubt, wobei detektiert wird, dass die Spiralinnenhülse (26) gegenüber der Spiralaußenhülse (23) über das Federelement (29) in einem vorgegebenen Einfederungsbereich einfedert.

4. Vorrichtung (16) nach Anspruch 1, **dadurch gekennzeichnet, dass** die Vorrichtung (16) eine Einheit (57, 58, 62, 65) aufweist, die beim Setzen der Schraube (8) eine Beschädigungsdetektion erlaubt, wobei detektiert wird, dass die Spiralinnenhülse (26) gegenüber der Spiralaußenhülse (23) über das Federelement (29) weiter als in dem vorgegebenen Einfederungsbereich einfedert.

5. Vorrichtung nach Anspruch 1, **dadurch gekennzeichnet, dass** der Niederhalter (44) ein Klemmelement (42) aufweist, welches die Schraubnuss (7) beim Setzen an seiner Außenmantelfläche klemmt, sodass die beim Setzkontakt auf Schraubnuss (7) wirkende Drehbewegung blockiert ist.

6. Vorrichtung (16) nach Anspruch 1, **dadurch gekennzeichnet, dass** der Niederhalter (44) stirnseitig mit einer Verzahnung versehen ist, die beim Setzkontakt der Schraube (8) auf die Schraubnuss (7) in eine gegenüberliegende Verzahnung einer ersten Blockierhülse (43) eingreift, wobei die erste Blockierhülse (43) auf der Außenmantelfläche der Schraubnuss (7) formschlüssig und/oder reibschlüssig und/oder kraftschlüssig ortsfest angeordnet ist, sodass die beim Setzkontakt auf die Schraubnuss (7) wirkende Drehbewegung blockiert ist.

7. Vorrichtung (16) nach Anspruch 1, **dadurch gekennzeichnet, dass** der Niederhalter (44) auf seiner Innenmantelfläche mit einer Verzahnung versehen ist, die beim Setzkontakt der Schraube (8) auf die Schraubnuss (7) in eine gegenüberliegende Verzahnung auf der Außenmantelfläche einer zweite Blockierhülse (45) eingreift, wobei die zweite Blockierhülse (45) auf der Außenmantelfläche der Schraubnuss (7) formschlüssig und/oder reibschlüssig und/oder kraftschlüssig angeordnet ist, sodass die beim Setzkontakt auf Schraubnuss (7) wirkende Drehbewegung blockiert ist.

8. Vorrichtung (16) nach Anspruch 1, **dadurch gekennzeichnet, dass** die Greifelemente (38) durch ein Spannelement (40) beim Aufnehmen und Setzen der Schraube (8) an den Schraubenschaft (8B) in radialer Richtung zur zentralen in Längserstreckung des Einführtrichters (39) der Vorrichtung (16) verlaufenden Achse Z gedrückt werden, wobei das Spannelement (40) insbesondere ein Gummiring ist, der die Greifelemente (38) elastisch nachgiebig umgreift.

9. Vorrichtung (16) nach Anspruch 1, **dadurch gekennzeichnet, dass** die ineinandergreifende Gewindepaarung ein Helixgewinde ist.

10. Verfahren zur Aufnahme eines Schraubenschaftes (8B) einer Schraube (8) mittels der Vorrichtung (16) nach mindestens einem der Ansprüche 1 bis 9, **dadurch gekennzeichnet, dass** sich beim Herunterfahren der Vorrichtung (16) gegenüber der Schraube (8) in der in Längserstreckung der Vorrichtung (16) liegenden Achse (Z),
• in einer ersten Aufnahme-Phase, Greifelemente (38) der Vorrichtung (16) über den Schraubenschaft (8B) der Schraube (8) schieben, wobei die Schraube (8) in einem durch die Greifelemente (38) gebildeten Einführtrichter (39) axial zentriert wird, wobei anschließend, bei einem weiteren Herunterfahren der Vorrichtung (16),
• in einer zweiten Aufnahme-Phase, der Schraubenschaft (8B) der Schraube (8) in den Einführtrichter (39) eingeschoben wird, wobei der Niederhalter (44) gegenüber der Spiralinnenhülse (26) und der Spiralaußenfeder (23) ausschließlich axial in Längserstreckung der Vorrichtung (16) einfedert, wobei anschließend bei einem weiteren Herunterfahren der Vorrichtung (16),
• in einer dritten Aufnahme-Phase, die Greifelemente (38) auf die Unterseite des Schraubenkopfes (8A) "auf Block" gefahren werden, wobei die Greifelemente (38) zu dem Schraubenschaft (8B) der Schraube (8) eine Reibkraft mit einem Reibkoeffizienten erzeugen, die von dem Spannelement (40) hervorgerufen wird, das in radialer Richtung zu der in Längserstreckung der Vorrichtung (16) liegenden Achse (Z) wirkt.

11. Verfahren zum Setzen eines Schraubenkopfes (8A) der Schraube (8) in eine Schraubnuss (7) einer externen Schraubeinheit (6) mittels der Vorrichtung (16) nach mindestens einem der Ansprüche 1 bis 9, **dadurch gekennzeichnet, dass** sich beim Herunterfahren der Vorrichtung (16) gegenüber der Schraube (8) in der in Längserstreckung der Vorrichtung (16) liegenden Achse (Z),
• in einer ersten Setz-Phase,_die in der Vorrichtung (16) aufgenommene Schraube (8) über eine Schraubnuss (7) positioniert wird, wobei anschließend beim weiteren Herunterfahren der Vorrichtung (16),
• in einer zweiten Setz-Phase, die Schraube (8) und die Schraubnuss (7) durch den Niederhalter (44) auf der in Längserstreckung der Vorrichtung (16) liegenden Achse (Z) zentriert werden, wobei anschließend beim weiteren Herunterfahren der Vorrichtung (16) in einer dritten Setz-Phase, die Schraubnuss (7) von dem Niederhalter (44) rotationsseitig blockiert wird, wobei anschließend beim weiteren Herunterfahren der Vorrichtung (16),
• in einer vierten Setz-Phase, der Schraubenkopf (8A) der Schraube (8) gegen die Federkraft eines Federelementes (29) in die Schraubnuss (7) eindringt, wobei dabei die Spiralinnenhülse (26) gegenüber der Spiralaußenhülse (23) eine Drehbewegung um die in Längserstreckung der Vorrichtung (16) liegenden Achse (Z) erfährt, bis der Schraubenkopf (8A) derart ideal zur Schraubnuss (7) steht und in einen Innensechskant der Schraubnuss (7) eindringt, wobei anschließend beim weiteren Herunterfahren der Vorrichtung (16),
• in einer fünften Setz-Phase, die Magnetkraft eines Permanentmagneten (9) am Fuß des Innensechskants der Schraubnuss (7) die Schraubnuss (7) magnetisch gehalten wird.

## Claims

1. Device (16) for receiving a screw shank (8B) of a screw (8) and for setting a screw head (8A) of the screw (8) into a screwing socket (7) of an external screwing unit (6), wherein a helical outer sleeve (23) of the device and a helical inner sleeve (26) mounted in the helical outer sleeve (23) is adjustably mounted by means of a corresponding intermeshing thread pairing in the helical outer sleeve (23), wherein the device (16) as a whole performs an axial movement in the longitudinal extension (Z) and the helical inner sleeve (26) performs a superimposed movement consisting of an axial movement and a rotary movement about an axis (Z) in the longitudinal extension of the device (18), as soon as an axial force is exerted on the helical outer sleeve (23) in the longitudinal extension of the device (16) and the helical inner sleeve (26) is indirectly supported against the axial force, wherein a spring element (29) is arranged which supports the helical inner sleeve (26) in an axially movable manner relative to the helical outer sleeve (23), wherein the helical inner sleeve (26) has a receiving element (26C) at the end of the helical inner sleeve pointing toward the screw (8), from which receiving element gripping elements (38) protrude, which are supported against the axial force on a supporting plate (21A) when the device (16) is in use, wherein the gripping elements (38) form an insertion funnel (39) having a receiving opening (31) for the screw shank (8B), wherein the screw shank (8B) is received by the gripping elements (38), leaving the screw head (8A) free, when the screw (8) is received by means of the device (16) which moves exclusively in the axial direction in the longitudinal extension, wherein the screw head (8A), which has been left free, of the received screw (8) is set in the screwing socket (7) during the setting of the screw (8), while the helical inner sleeve (26) performs the superimposed axial rotary movement relative to the helical outer sleeve (23) when the gripping elements (38) are supported against the axial force on the screwing socket (7), wherein a hold-down member (44) is arranged on the helical outer sleeve (23), which hold-down member is axially movable in the longitudinal extension of the device (16) and, during the setting of the screw head (8A) in the screwing socket (7), blocks the screwing socket (7) against the rotary movement, from the helical inner sleeve (26) via the screw shank (8B), acting on the screw (8) and acting on the screwing socket (7) during setting contact.

2. Device (16) according to claim 1, **characterized in that** the device (16) has a length ascertainment assembly (54) which allows the length of the screw (8) to be ascertained during the setting of the screw (8), wherein the length ascertainment assembly (54) comprises the components (55, 56, 57, 58, 59, 61).

3. Device (16) according to claim 1, **characterized in that** the device (16) has a unit (57, 58, 60, 62) which allows monitoring detection during the setting of the screw (8), wherein it is detected that the helical inner sleeve (26) compresses relative to the helical outer sleeve (23) in a predetermined compression region, by means of the spring element (29).

4. Device (16) according to claim 1, **characterized in that** the device (16) has a unit (57, 58, 62, 65) which allows damage detection during the setting of the screw (8), wherein it is detected that the helical inner sleeve (26) compresses relative to the helical outer sleeve (23) further than in the predetermined compression region, by means of the spring element (29).

5. Device according to claim 1, **characterized in that** the hold-down member (44) has a clamping element (42) which clamps the screwing socket (7) on the outer lateral surface thereof during setting, so that the rotary movement acting on the screwing socket (7) during setting contact is blocked.

6. Device (16) according to claim 1, **characterized in that** the hold-down member (44) is provided with a toothing on the end face thereof, which toothing, during setting contact of the screw (8) on the screwing socket (7), engages in an opposing toothing of a first blocking sleeve (43), wherein the first blocking sleeve (43) is fixedly arranged on the outer lateral surface of the screwing socket (7) in a form-fitting and/or friction-fitting and/or force-fitting manner, so that the rotary movement acting on the screwing socket (7) during setting contact is blocked.

7. Device (16) according to claim 1, **characterized in that** the hold-down member (44) is provided with a toothing on the inner lateral surface thereof, which toothing, during setting contact of the screw (8) on the screwing socket (7), engages in an opposing toothing on the outer lateral surface of a second blocking sleeve (45), wherein the second blocking sleeve (45) is arranged on the outer lateral surface of the screwing socket (7) in a form-fitting and/or friction-fitting and/or force-fitting manner, so that the rotary movement acting on the screwing socket (7) during setting contact is blocked.

8. Device (16) according to claim 1, **characterized in that** the gripping elements (38) are pressed, by a tensioning element (40), onto the screw shank (8B) in a radial direction with respect to a central axis Z extending in the longitudinal extension of the insertion funnel (39) of the device (16) during reception and setting of the screw (8), wherein the clamping element (40) is in particular a rubber ring which surrounds the gripping elements (38) in an elastically compliant manner.

9. Device (16) according to claim 1, **characterized in that** the intermeshing thread pairing is a helical thread.

10. Method for receiving a screw shank (8B) of a screw (8) by means of the device (16) according to at least one of claims 1 to 9, **characterized in that,** when the device (16) is lowered relative to the screw (8) in the axis (Z) which lies in the longitudinal extension of the device (16),
• in a first receiving phase, gripping elements (38) of the device (16) slide over the screw shank (8B) of the screw (8), wherein the screw (8) is axially centered in an insertion funnel (39) formed by the gripping elements (38), wherein subsequently, during further lowering of the device (16),
• in a second receiving phase, the screw shank (8B) of the screw (8) is inserted into the insertion funnel (39), wherein the hold-down member (44) compresses exclusively axially in the longitudinal extension of the device (16) relative to the helical inner sleeve (26) and the helical outer spring (23), wherein subsequently, during further lowering of the device (16),
• in a third receiving phase, the gripping elements (38) on the underside of the screw head (8A) are moved "to block", wherein the gripping elements (38) generate a frictional force having a friction coefficient with respect to the screw shank (8B) of the screw (8), which frictional force is caused by the clamping element (40) which acts in a radial direction with respect to the axis (Z) which lies in the longitudinal extension of the device (16).

11. Method for setting a screw head (8A) of the screw (8) into a screwing socket (7) of an external screwing unit (6) by means of the device (16) according to at least one of claims 1 to 9, **characterized in that,** when the device (16) is lowered relative to the screw (8) in the axis (Z) which lies in the longitudinal extension of the device (16),
• in a first setting phase, the screw (8) received in the device (16) is positioned above a screwing socket (7), wherein subsequently, during further lowering of the device (16),
• in a second setting phase, the screw (8) and the screwing socket (7) are centered by means of the hold-down member (44) on the axis (Z) which lies in the longitudinal extension of the device (16), wherein subsequently, during further lowering of the device (16) in a third setting phase, the screwing socket (7) is blocked against rotation by the hold-down member (44), wherein subsequently, during further lowering of the device (16),
• in a fourth setting phase, the screw head (8A) of the screw (8) penetrates into the screwing socket (7) against the spring force of a spring element (29), wherein the helical inner sleeve (26) undergoes a rotary movement relative to the helical outer sleeve (23) about the axis (Z) which lies in the longitudinal extension of the device (16), until the screw head (8A) is ideally positioned with respect to the screwing socket (7) and penetrates into an internal hexagon of the screwing socket (7), wherein subsequently, during further lowering of the device (16),
• in a fifth setting phase, the magnetic force of a permanent magnet (9) at the base of the internal hexagon of the screwing socket (7) the screwing socket (7) is magnetically held.

## Revendications

1. Dispositif (16) destiné à la réception d'une tige de vis (8B) d'une vis (8) et à la mise en place d'une tête de vis (8A) de la vis (8) dans une douille (7) d'une unité de vissage (6) externe, dans lequel un manchon extérieur en spirale (23) du dispositif ainsi qu'un manchon intérieur en spirale (26) logé dans le manchon extérieur en spirale (23) est logé de manière réglable dans le manchon extérieur en spirale (23) par l'intermédiaire d'un appariement de filetages correspondants venant en prise l'un dans l'autre, dans lequel le dispositif (16) exécute globalement un mouvement axial dans l'extension longitudinale (Z) et le manchon intérieur en spirale (26) exécute un mouvement superposé constitué d'un mouvement axial et d'un mouvement de rotation autour d'un axe (Z) dans l'extension longitudinale du dispositif (18) chaque fois qu'une force axiale est exercée sur le manchon extérieur en spirale (23) dans l'extension longitudinale du dispositif (16) et que le manchon intérieur en spirale (26) s'appuie indirectement à l'encontre de la force axiale, dans lequel un élément formant ressort (29) est disposé, lequel soutient le manchon intérieur en spirale (26) par rapport au manchon extérieur en spirale (23) de manière à permettre un mouvement axial, dans lequel le manchon intérieur en spirale (26) présente, à son extrémité orientée vers la vis (8), un élément de réception (26C) duquel dépassent des éléments de préhension (38) qui, lors de l'utilisation du dispositif (16), s'appuient à l'encontre de la force axiale sur une plaque d'appui (21A), dans lequel les éléments de préhension (38) forment un entonnoir d'introduction (39) comportant une ouverture de réception (31) pour la tige de vis (8B), dans lequel la tige de vis (8B) est reçue par les éléments de préhension (38) lors de la réception de la vis (8) par le biais du dispositif (16) se déplaçant exclusivement dans la direction axiale dans l'extension longitudinale, en laissant libre la tête de vis (8A), dans lequel la tête de vis (8A) laissée libre de la vis (8) reçue est placée dans la douille (7) lors de la mise en place de la vis (8), pendant que le manchon intérieur en spirale (26) effectue le mouvement de rotation axial superposé par rapport au manchon extérieur en spirale (23), lorsque les éléments de préhension (38) s'appuient sur la douille (7) à l'encontre de la force axiale, dans lequel un serre-flan (44) axialement mobile dans l'extension longitudinale du dispositif (16) est disposé sur le manchon extérieur en spirale (23), lequel serre-flan bloque la douille (7), lors de la mise en place de la tête de vis (8A) dans la douille (7), à l'encontre du mouvement de rotation agissant par l'intermédiaire de la tige de vis (8B) du manchon intérieur en spirale (26) sur la vis (8) et lors du contact de mise en place sur la douille (7).

2. Dispositif (16) selon la revendication 1, **caractérisé en ce que** le dispositif (16) présente un ensemble de détermination de longueur (54) qui permet une détection de longueur de la vis (8) lors de la mise en place de la vis (8), dans lequel l'ensemble de détermination de longueur (54) comprend les composants (55, 56, 57, 58, 59, 61).

3. Dispositif (16) selon la revendication 1, **caractérisé en ce que** le dispositif (16) présente une unité (57, 58, 60, 62) qui permet une détection de surveillance lors de la mise en place de la vis (8), dans lequel il est détecté que le manchon intérieur en spirale (26) se comprime, dans une plage de compression prédéfinie, par rapport au manchon extérieur en spirale (23) par l'intermédiaire de l'élément formant ressort (29).

4. Dispositif (16) selon la revendication 1, **caractérisé en ce que** le dispositif (16) présente une unité (57, 58, 62, 65) qui permet une détection d'endommagement lors de la mise en place de la vis (8), dans lequel il est détecté que le manchon intérieur en spirale (26) se comprime, au-delà de la plage de compression prédéfinie, par rapport au manchon extérieur en spirale (23) par l'intermédiaire de l'élément formant ressort (29).

5. Dispositif selon la revendication 1, **caractérisé en ce que** le serre-flan (44) présente un élément de serrage (42) qui serre la douille (7) sur sa surface d'enveloppe extérieure lors de la mise en place, de sorte que le mouvement de rotation agissant sur la douille (7) lors du contact de mise en place est bloqué.

6. Dispositif (16) selon la revendication 1, **caractérisé en ce que** le serre-flan (44) est pourvu, sur sa face frontale, d'une denture qui, lors du contact de mise en place de la vis (8) sur la douille (7), vient en prise dans une denture opposée d'un premier manchon de blocage (43), dans lequel le premier manchon de blocage (43) est disposé de manière fixe sur la surface d'enveloppe extérieure de la douille (7) par complémentarité de forme et/ou par frottement et/ou à force, de sorte que le mouvement de rotation agissant sur la douille (7) lors du contact de mise en place est bloqué.

7. Dispositif (16) selon la revendication 1, **caractérisé en ce que** le serre-flan (44) est pourvu, sur sa surface d'enveloppe intérieure, d'une denture qui, lors du contact de mise en place de la vis (8) sur la douille (7), vient en prise dans une denture opposée sur la surface d'enveloppe extérieure d'un second manchon de blocage (45), dans lequel le second manchon de blocage (45) est disposé sur la surface d'enveloppe extérieure de la douille (7) par complémentarité de forme et/ou par frottement et/ou à force, de sorte que le mouvement de rotation agissant sur la douille (7) lors du contact de mise en place est bloqué.

8. Dispositif (16) selon la revendication 1, **caractérisé en ce que** les éléments de préhension (38) sont pressés par un élément tendeur (40) lors de la réception et de la mise en place de la vis (8) sur la tige de vis (8B) dans la direction radiale par rapport à l'axe central (Z) s'étendant dans l'extension longitudinale de l'entonnoir d'introduction (39) du dispositif (16), dans lequel l'élément tendeur (40) est en particulier un anneau en caoutchouc qui entoure les éléments de préhension (38) de manière élastiquement souple.

9. Dispositif (16) selon la revendication 1, **caractérisé en ce que** l'appariement de filetages venant en prise l'un dans l'autre est un filetage hélicoïdal.

10. Procédé permettant de recevoir une tige de vis (8B) d'une vis (8) par le biais du dispositif (16) selon au moins l'une des revendications 1 à 9,
**caractérisé en ce que,** lors de l'abaissement du dispositif (16) par rapport à la vis (8), dans l'axe (Z) situé dans l'extension longitudinale du dispositif (16),
• des éléments de préhension (38) du dispositif (16) sont poussés sur la tige de vis (8B) de la vis (8) dans une première phase de réception, dans lequel la vis (8) est centrée axialement dans un entonnoir d'introduction (39) formé par les éléments de préhension (38), dans lequel ensuite, lors d'un abaissement supplémentaire du dispositif (16),
• la tige de vis (8B) de la vis (8) est insérée dans l'entonnoir d'introduction (39) dans une deuxième phase de réception, dans lequel le serre-flan (44) est comprimé exclusivement axialement dans l'extension longitudinale du dispositif (16) par rapport au manchon intérieur en spirale (26) et au ressort extérieur en spirale (23), dans lequel ensuite, lors d'un abaissement supplémentaire du dispositif (16),
• les éléments de préhension (38) sont amenés « en bloc » sur la face inférieure de la tête de vis (8A) dans une troisième phase de réception, dans lequel les éléments de préhension (38) génèrent, par rapport à la tige de vis (8B) de la vis (8), une force de frottement comportant un coefficient de frottement qui est induit par l'élément tendeur (40) qui agit dans la direction radiale par rapport à l'axe (Z) situé dans l'extension longitudinale du dispositif (16).

11. Procédé permettant de mettre en place une tête de vis (8A) de la vis (8) dans une douille (7) d'une unité de vissage (6) externe par le biais du dispositif (16) selon au moins l'une des revendications 1 à 9,
**caractérisé en ce que** lors de l'abaissement du dispositif (16) par rapport à la vis (8) dans l'axe (Z) situé dans l'extension longitudinale du dispositif (16),
• la vis (8) logée dans le dispositif (16) est positionnée par l'intermédiaire d'une douille (7) dans une première phase de mise en place, dans lequel ensuite, lors de l'abaissement supplémentaire du dispositif (16),
• la vis (8) et la douille (7) sont centrées par le serre-flan (44) sur l'axe (Z) situé dans l'extension longitudinale du dispositif (16) dans une deuxième phase de mise en place, dans lequel ensuite, la douille (7) est bloquée en rotation par le serre-flan (44) lors de l'abaissement supplémentaire du dispositif (16) dans une troisième phase de mise en place, dans lequel ensuite, lors de l'abaissement supplémentaire du dispositif (16),
• la tête de vis (8A) de la vis (8) pénètre dans la douille (7) à l'encontre de la force de ressort d'un élément formant ressort (29) dans une quatrième phase de mise en place, dans lequel le manchon intérieur en spirale (26) subit alors un mouvement de rotation par rapport au manchon extérieur en spirale (23) autour de l'axe (Z) situé dans l'extension longitudinale du dispositif (16), jusqu'à ce que la tête de vis (8A) se trouve dans une position idéale par rapport à la douille (7) et pénètre dans un six pans creux de la douille (7), dans lequel ensuite, lors de l'abaissement supplémentaire du dispositif (16),
• la force magnétique d'un aimant permanent (9) au pied du six pans creux de la douille (7) maintient magnétiquement la douille (7) dans une cinquième phase de mise en place.
